# EUROPÄISCHE PATENTSCHRIFT

(11) **EP 3 303 175 B1**
(45) Veröffentlichungstag und Bekanntmachung des Hinweises auf die Patenterteilung: **27.11.2019**
(21) Anmeldenummer: 16718376.3
(22) Anmeldetag: 26.04.2016
(51) Int. Cl.: B65D 81/22, A24F 25/02, B01D 53/26, B65D 81/26, G01N 33/487

(54) **BEHÄLTNIS FÜR DIE LAGERUNG VON FEUCHTEGRADSENSIBLEN PRODUKTEN**
CONTAINER FOR STORING MOISTURE LEVEL-SENSITIVE PRODUCTS
RÉCIPIENT POUR LE STOCKAGE DE PRODUITS SENSIBLES AU DEGRÉ D'HUMIDITÉ

(30) Priorität: 28.05.2015 AT 504362015
(43) Veröffentlichungstag der Anmeldung: 11.04.2018
(73) Patentinhaber: Pyar Ltd., London WC1A 1DG (GB)
(72) Erfinder: ERIKSSON-AHUJA, Asa, London SW1X 7EP (GB)
(74) Vertreter: Wildhack & Jellinek
(86) Internationale Anmeldenummer: PCT/EP2016/059255
(87) Internationale Veröffentlichungsnummer: WO 2016/188690

(56) Entgegenhaltungen:
- WO-A1-2012/049546
- WO-A1-2012/087318
- CH-A- 254 991
- CN-U- 2 083 855
- CN-Y- 201 271 175
- FR-A- 966 606
- FR-A1- 2 517 279
- US-A- 5 114 003
- US-A1- 2009 145 783
- US-A1- 2013 334 074
- US-A1- 2015 136 618

## Beschreibung

Die vorliegende Erfindung betrifft ein neues Behältnis für eine, einen jeweils optimalen Feuchtegrad der in dessen Innerem herrschenden Binnenatmosphäre ein- und aufrechthaltende und damit jeweils spezifisches Aroma, speziellen Geschmack, spezielle Konsistenz und Haptik und/oder dgl. voll aufrecht erhaltende Aufbewahrung und Lagerung von Produkten verschiedenster Art, insbesondere des Nahrungs-, Lebens- und Genussmittelsektors, wozu - keineswegs vollständig - ess- und/oder genießbare und/oder verderbliche und/oder ihren spezifischen Charakter verlierende Produkte, wie nur beispielsweise Kräuter, Gewürze, Tees, Kaviar, Trüffel, Spezial-Käse, -Wurst- und - Fleischwaren zu nennen wären.

Im Folgenden werden die eben genannten Produkte der Einfachheit halber durchgehend als "feuchtegradsensible Produkte" bezeichnet. Es können diese Produkte aber zusätzlich auch temperatursensibel sein.

Es sind schon die verschiedensten Vorschläge für Behälter für die Erhaltung und Konstanthaltung der Feuchte von Tabaken gemacht und in Form von Humidoren auch verwirklicht worden.

Hierzu sei beispielsweise auf US 2015/136618 A1 und US 2013/334074 A1 verwiesen, aus welchen das Prinzip der Trocknung und Trockenhaltung von Gütern in einem geschlossenen Raum bekannt ist.

Aufgabe der Erfindung ist es, ein Behältnis bereitzustellen, das tatsächlich imstande ist, die Feuchte der die in ihrem Feuchtegrad zu erhaltenden Produkte, wie z.B. Tee, Tee-Ziegel od. dgl. umgebenden Atmosphäre auf konstante und - jedenfalls für die jeweilige Produkt-, beispielsweise Teesorte - auf optimalen Werte zu halten und damit eine aromaneutrale Lagerung von feuchtegradsensiblen Produkten zu ermöglichen.

Bei dem neuen Behältnis für die Aufbewahrung und Lagerung von wie oben genannten feuchtegradsensiblen Produkte ist - die speziellen Eigenschaften und Bedürfnisse jedes einzelnen dieser Produkte, es seien hiezu nur beispielsweise Tees der verschiedenen Sorten genannt, berücksichtigend -vorgesehen, dass in einem vorzugsweise mit einem durchsichtigen Material, insbesondere Kristall-Glas oder Transluzid-Polymer, gebildeten, bevorzugt im Wesentlichen kubische Außenform bzw. Außengestalt aufweisenden, Behältnis zumindest zwei aneinander grenzende Binnenräume angeordnet sind, deren beide in ihnen vorhandenen Atmosphären sich über eine Mehrzahl von Atmosphären-Verbindungs- und -Austauschelementen, insbesondere -brücken, zu einer einheitlichen, nur einen bestimmten Feuchtegrad ohne lokale Feuchtegradienten aufweisenden, von der Außenatmosphäre unbeeinflussbaren Gesamt-Binnenatmosphäre vereinigen, wobei einer der beiden Binnenräume, nämlich jener, der für die Aufnahme und Aufbewahrung des in seiner Qualität auch langfristig jeweils voll zu bewahrenden Produkts vorgesehen ist, mit im Wesentlichen zylindrisch konkaver Gestalt mit im Wesentlichen in sich geschlossener Gesamtwand ausgebildet ist, welcher einen abnehmbaren, jedoch gegen die Außenatmosphäre exakt dichtenden Verschlussdeckel und ein wesentlich höheres Volumen aufweist, als der - zumindest eine - andere, ebenfalls gegen die Außenatmosphäre dichtend verschließbare, flache Binnenraum mit relativ geringem Volumen, der für die Aufnahme und Lagerung eines Feuchteregulationsmittels vorgesehen ist. Die oben aufscheinende Bezeichnung "Außenform" bedeutet "von außen sichtbare geometrische Gestalt" und scheint mit dieser Bedeutung in der gesamten folgenden Beschreibung der Erfindung auf.

### Erfindungsgemäß ist vorgesehen,

- dass das Behältnis im Wesentlichen kubusartige oder nach Art eines gleichmäßig vierseitigen Prismas gebaute geometrische Außenform aufweist, und
- dass dessen Binnenraum für die Lagerung des feuchtegradsensiblen Produkts im Wesentlichen Zylinder-Form aufweist und als Atmosphären-Verbindungs- und
- Austausch-Elemente Atmosphären-Verbindungs-Kanäle aufweist, und zwar zumindest zwei, bevorzugter Weise vier solche, innerhalb entsprechend verstärkter vertikaler Innenkanten- bzw. Zwickelbereiche des Behälters, vom Binnenraum getrennt, im Wesentlichen innenkanten-parallel verlaufende, jeweils von dem unterhalb des Binnenraums für die Lagerung des feuchtegradsensiblen Produkts angeordneten und von demselben durch eine den Boden desselben bildende Trennwand getrennten Binnenraum für die Aufnahme des Feuchtigkeitsregulationsmittels ausgehenden und an seinem oberen Ende etwa muschelartig schräg nach abwärts sich erweiternd in den Binnenraum für die Lagerung des feuchtegradsensiblen Produkts auslaufende, gegebenenfalls sich nach oben hin geringfügig erweiternde, im Wesentlichen rohrartig zylindrische Atmosphären-Austausch- und -Verbindungskanäle aufweist.

Das neue Behältnis ist aufgrund der speziellen Konstruktion und der Verbindungen seiner unterschiedlichen Binnenräume miteinander zum ersten Mal tatsächlich imstande, die Feuchte der die in ihrem Feuchtegrad zu erhaltenden Produkte, wie z.B. Tee, Tee-Ziegel od. dgl. umgebenden Atmosphäre auf konstante und - jedenfalls für die jeweilige Produkt-, beispielsweise Teesorte - optimale Werte zu halten.

So ist, siehe Anspruch 2, vorteilhafter Weise ein Behältnis vorgesehen, innerhalb welchem die Atmosphären-Verbindungs- und Austauschelemente, insbesondere -brücken durch eine Vielzahl von in zumindest einer, insbesondere ebenen, Trennwand zwischen dem Binnenraum für die Lagerung des feuchtegradsensiblen Produkts und dem zumindest einen Binnenraum für die Aufnahme des Feuchteregulationsmittels angeordneten, diese Trennwand durchsetzenden Atmosphären-Verbindungs-Ausnehmungen, -Löchern, -Kanälchen od. dgl. gebildet sind. Vorteilhafterweise weist die den Binnenraum (2) für die Lagerung des feuchtegradsensiblen Produkts (5) vom Binnenraum (3) für die Aufnahme des Feuchtigkeitsregulationsmittels (4) trennende Trennwand (23) also Atmosphären- Verbindungsöffnungen (32) auf.

Hierbei ist es, insbesondere im Hinblick auf eventuelle geruchsemittierende Korrosion, von Vorteil, wenn, siehe Anspruch 3, die zumindest eine Trennwand mit den sie durchsetzenden Atmosphären-Verbindungs-Ausnehmungen, -Löchern, -Kanälchen od. dgl. zwischen dem Binnenraum für die Lagerung des feuchtegradsensiblen Produkts und dem zumindest einen Binnenraum für die Aufnahme des Feuchteregulationsmittels mit geruchsneutralem Edelstahl, der vorzugsweise beidseitig mit Edelmetall, insbesondere Gold oder Palladium, beschichtet ist, gebildet ist.

Günstig, insbesondere im Hinblick auf konstante und im gesamten Binnenraum für die Lagerung der feuchtegradsensiblen Produkte überall, also in jedem Raumelement, gleiche Feuchte aufweisende Atmosphäre, ist es, wenn, siehe Anspruch 4, die Atmosphären-Austausch- und -Verbindungs-Ausnehmungen, -Löcher, -Kanälchen od. dgl. in der jeweiligen Trennwand sich mit einem Öffnungswinkel zwischen 80 und 60° zum Binnenraum für die Lagerung des zu bewahrenden Produkts hin aufweiten.

Gemäß einer besonderen Ausführungsform des neuen Behältnisses ist, siehe Anspruch 5, die genannte Trennwand kreisrund ausgebildet und die Achsen der Atmosphären-Verbindungs-Ausnehmungen, -Löcher, -Kanälchen od. dgl. sind jeweils von der Trennwand-Mitte ausgehend, radial nach außen hin in Winkeln von kontinuierlich steigenden 0 bis 25°, bzw. kontinuierlich fallenden 90 bis 65°, zur Ebene bzw. Fläche der Trennwand ausgerichtet.

Es hat sich in der Praxis als günstig erwiesen, wenn, siehe Anspruch 6, die Trennwand nach Art eines mit geruchsneutralem Kunststoff gebildeten und gegebenenfalls zusätzlich mit Edelmetall beschichteten Drahtnetzes ausgebildet ist.

Des Weiteren kann es - insbesondere zur Erreichung einer hohen Konstanz der Feuchte der Binnenatmosphäre im Binnenraum für das jeweilige feuchtegradsensible Produkt - von Vorteil sein, wenn, siehe Anspruch 7, die Trennwand mittig um einen Betrag von bis zu 1,5 cm kugelkalottenförmig zum Binnenraum für die Lagerung des feuchtegradsensiblen Produkts hin, also konvex nach aufwärts gewölbt ist.

Im Sinne der Konstanthaltung der Feuchte in Behältnissen sieht man, siehe Anspruch 8, bevorzugter Weise vor, dass der den Binnenraum für die Lagerung des feuchtegradsensiblen Produkts von dem Binnenraum zur Aufnahme des Feuchteregulationsmittels durch eine Trennwand mit Atmosphären-Austausch- und Verbindungs-Ausnehmungen getrennt ist und dass von diesem letztgenannten Binnenraum vier, innerhalb entsprechend verstärkter, vertikaler Innenkanten-Bereiche, vom Binnenraum getrennt, im Wesentlichen innenkanten-parallel verlaufende Atmosphären-Austausch- und -Verbindungskanäle ausgehen, welche an ihren oberen Enden sich etwa muschelartig schräg nach abwärts erweiternd in den Binnenraum für die Lagerung des feuchtegradsensiblen Produkts auslaufen.

Vorzugsweise ist bei diesem Behältnis für das feuchtegradsensible Produkt dafür gesorgt, dass, siehe Anspruch 9, dessen obenseitig angeordnete Öffnung zu dessen Binnenraum hin kreisrunden Querschnitt aufweist und dass der - zu deren gegen die Außen-Atmosphäre dichten Verschließung vorgesehene - Verschlussdeckel eine im Wesentlichen hohlzylinderförmige in den genannten Binnenraum für das feuchtegradsensible Produkt abwärts ragende Protrusion besitzt.

Unterstützt kann die Konstanthaltung der Feuchte noch dadurch werden, dass, siehe Anspruch 10, die obenseitig angeordnete Öffnung zu dessen Binnenraum hin quadratischen Querschnitt aufweist, und dass der zu deren gegen die Außen-Atmosphäre dichten Verschließung vorgesehene Verschlussdeckel, vier, den Seiten eines Quadrats entsprechend angeordnete, miteinander zusammenhängende, nach abwärts ragende Einzelprotrusionen aufweist, welche den Nahbereichen der Quadratecken dort, wo die etwa muschelartigen Erweiterungen der Atmosphären-Verbindungs- und -Austauschkanäle angeordnet sind, selbst gerundete, ebenfalls etwa muschelartige Ausnehmungen aufweisen.

Wenn, wie eingangs kurz ausgeführt, das gesamte Behältnis und insbesondere der Verschlussdeckel von dessen Binnenraum im Behälter für das feuchtegradsensible Produkt aus einem licht-transparenten, klar durchsichtigen Glas- oder Polymermaterial gefertigt ist, ist es von besonderem Vorteil, wenn, siehe Anspruch 10, innerhalb einer hohlzylindrischen Protrusion des Verschlussdeckels eine dort eingepasste, flach zylindrische, eine von außen bzw. von oberhalb problemlos ablesbare Feuchtegradskala aufweisende Messdose für die im Binnenraum für die Lagerung des feuchtegradsensiblen Produkts herrschende und für die Aufrechterhaltung von dessen Qualität maßgebliche Feuchtigkeit der dasselbe umgebenden Atmosphäre angeordnet ist und wenn gegebenenfalls die genannte Messdose zusätzlich zur Feuchtigkeit die im Binnenraum für die Lagerung des feuchtegradsensiblen Produkts herrschende Temperatur misst und anzeigt. Hierbei ist der weitere immense Vorteil gegeben, dass das feuchtegradsensible Produkt selbst und dessen Momentanzustand jederzeit direkt beobachtet und kontrolliert werden kann.

In gleicher Weise kann, siehe Anspruch 12, innerhalb der hohlzylindrischen Protrusion oder in einer gesonderten Ausnehmung des Verschlussdeckels ein modernes, Sensoren für die Ermittlung der Feuchte und/oder der Temperatur im Binnenraum für die Lagerung des feuchtegradsensiblen Produkts aufweisendes und deren Werte digital wiedergebendes Digitalanzeigegerät angeordnet sein.

Was die Ausbildung des Binnenraums für die Aufnahme des Feuchteregulationsmittels betrifft, so kann/können, siehe Anspruch 13, vorteilhafter Weise dieser zumindest eine Binnenraum und die gegebenenfalls weiters vorhandenen Binnenräume für die Aufnahme des Feuchteregulationsmittels im Wesentlichen flach-schachtelartig ausgebildet und für die Bestückung dieses/dieser Binnenraums/Binnenräume mittels mit klavier-scharnierartigem Scharnier ausgestattetem klappenartigem Schließdeckel öffenbar und nach erfolgter Bestückung gegen die Außenatmosphäre wieder dichtend schließbar sein, oder aber ein unterseitiger Schließdeckel vorgesehen sein, auf welchem das Feuchteregulationsmittel positioniert sein kann, welches Ensemble von Schließdeckel und Feuchteregulationsmittel von unten in den Boden des Behälters mit dem Binnenraum für das Feuchteregulationsmittel gegen die Außen-Atmosphäre dichtend einschiebbar, insbesondere einschraubbar, ist, oder welcher Schließdeckel in eine untere Öffnung des Bodens einschraubbar ist, durch welche nach Entfernen des Schließdeckels das Feuchteregulationsmittel in den im Boden vorhandenen Binnenraum einbringbar ist.

Gemäß einer abweichenden Variante kann, siehe Anspruch 14, vorgesehen sein, dass dieser zumindest eine Binnenraum für die Aufnahme des Feuchteregulationsmittels im Wesentlichen flach-schachtelartig ausgebildet und in denselben jeweils eine Art Lade mit dem Feuchteregulationsmittel gegen die Außenatmosphäre dichtend einschiebbar ist.

Letztlich bildet ein Gesamt-Aufbewahrungs-Set mit einer Mehrzahl von, insbesondere wie oben beschriebenen, Behältnissen mit unterschiedlichen Produkten oder Produkten unterschiedlicher Sorten den Gegenstand des Anspruchs 15.

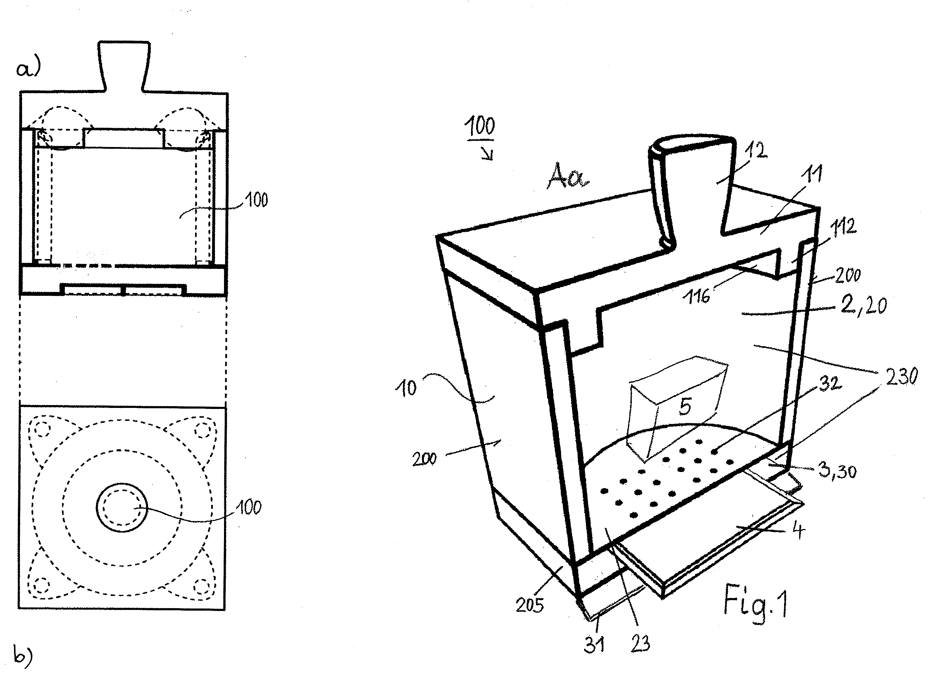

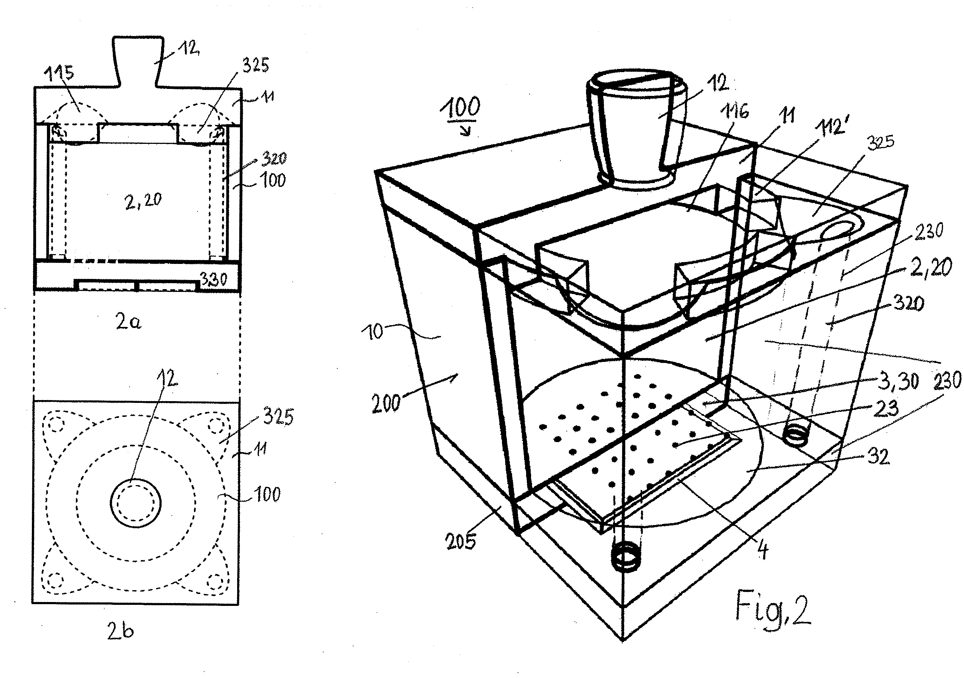

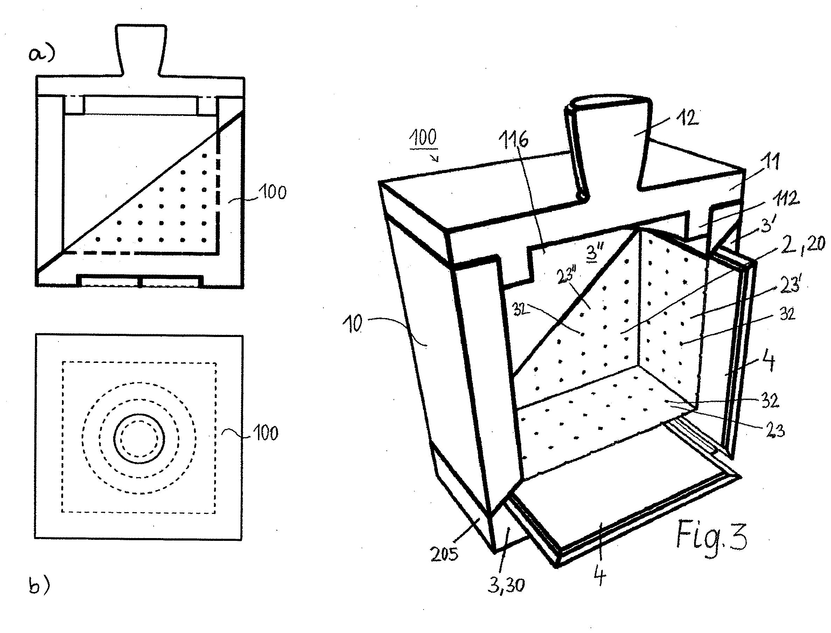

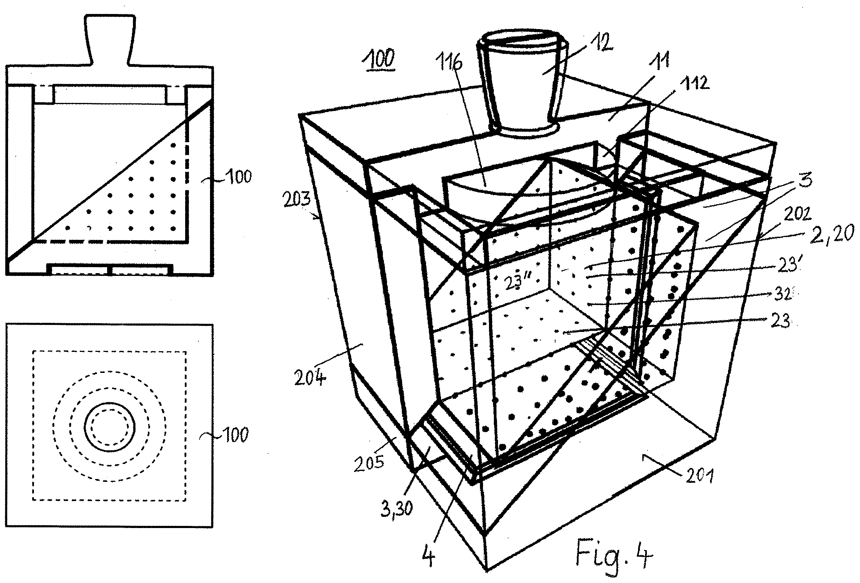

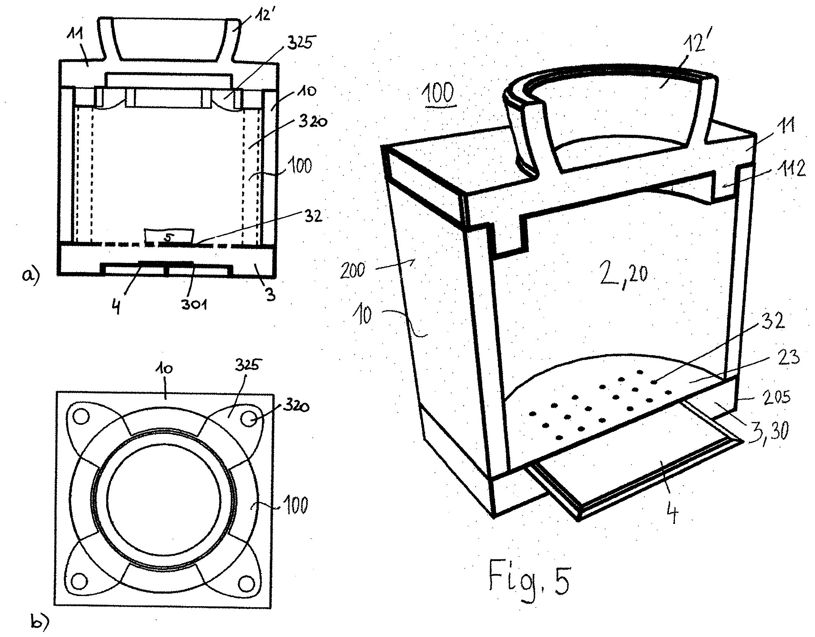

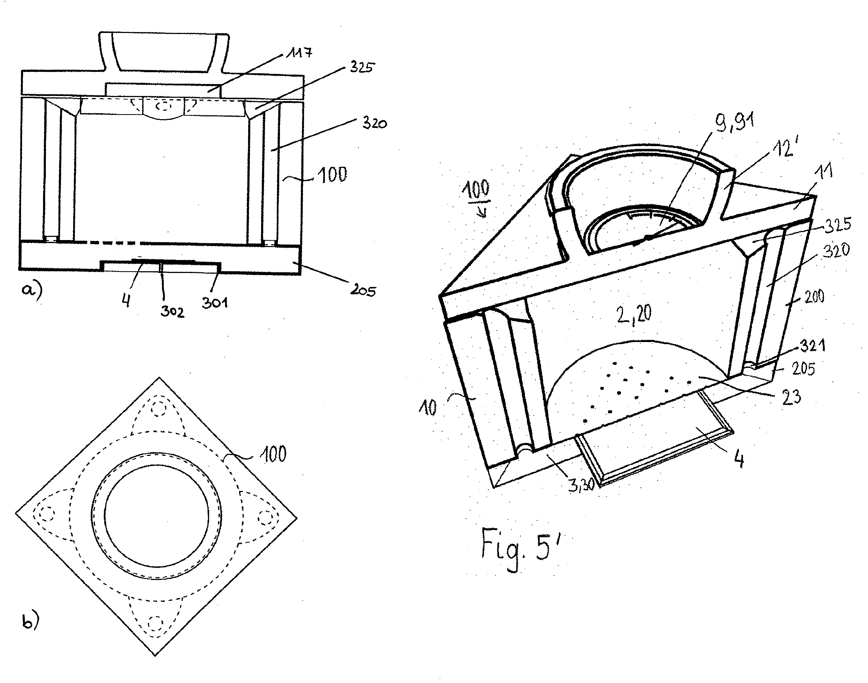

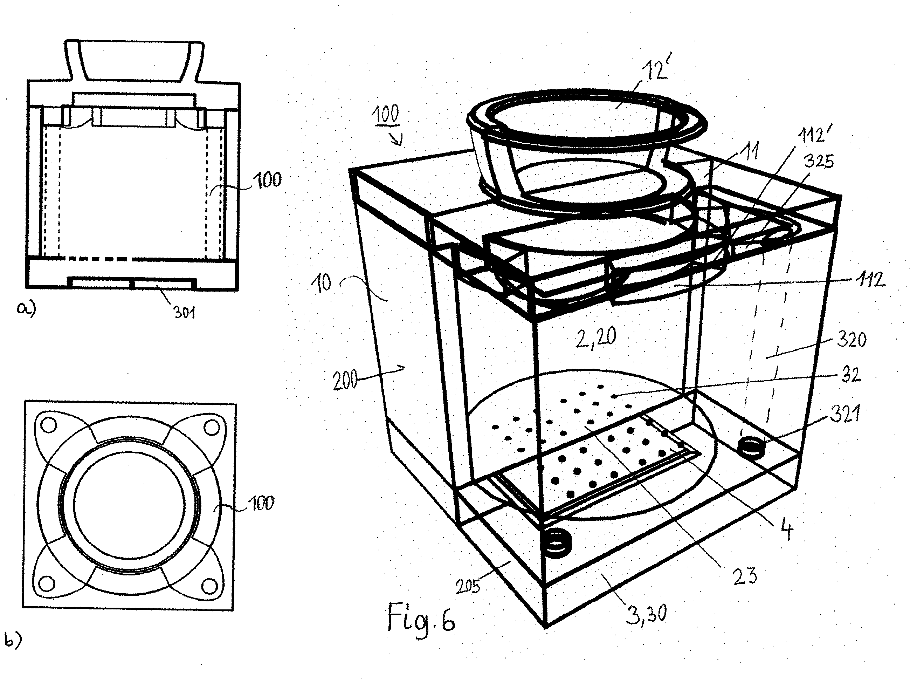

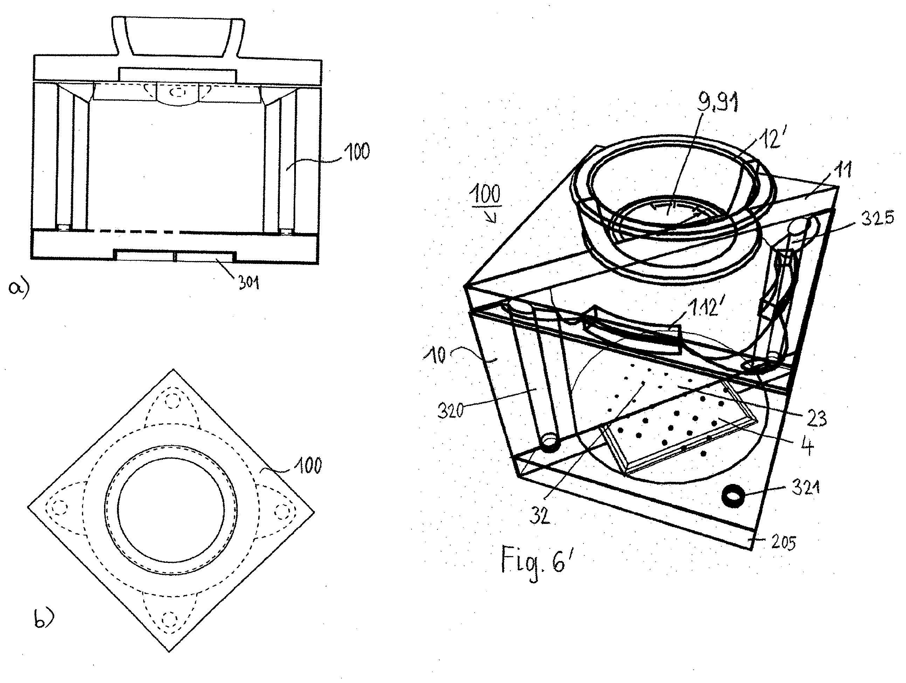

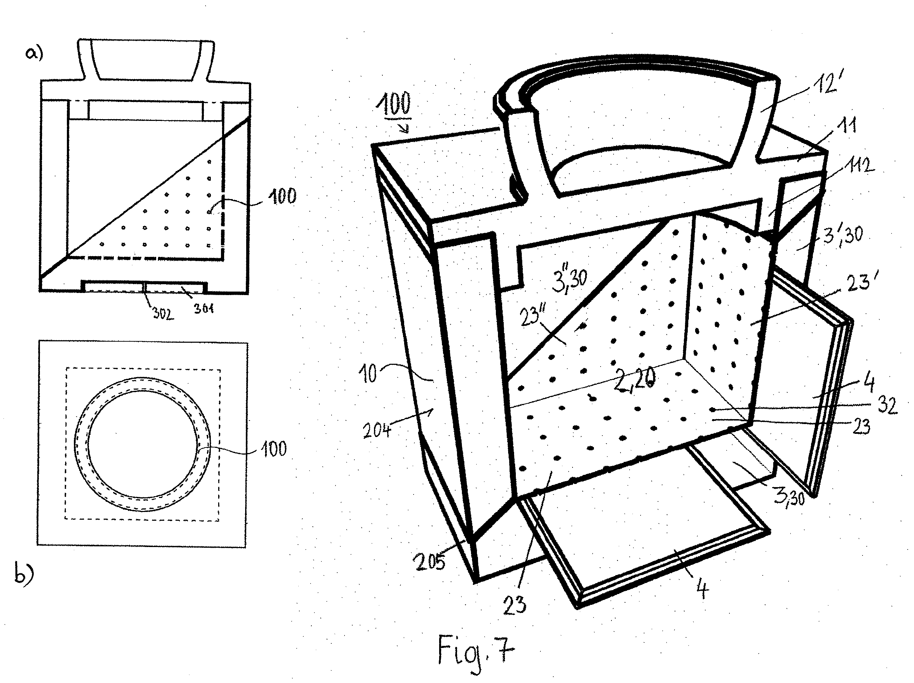

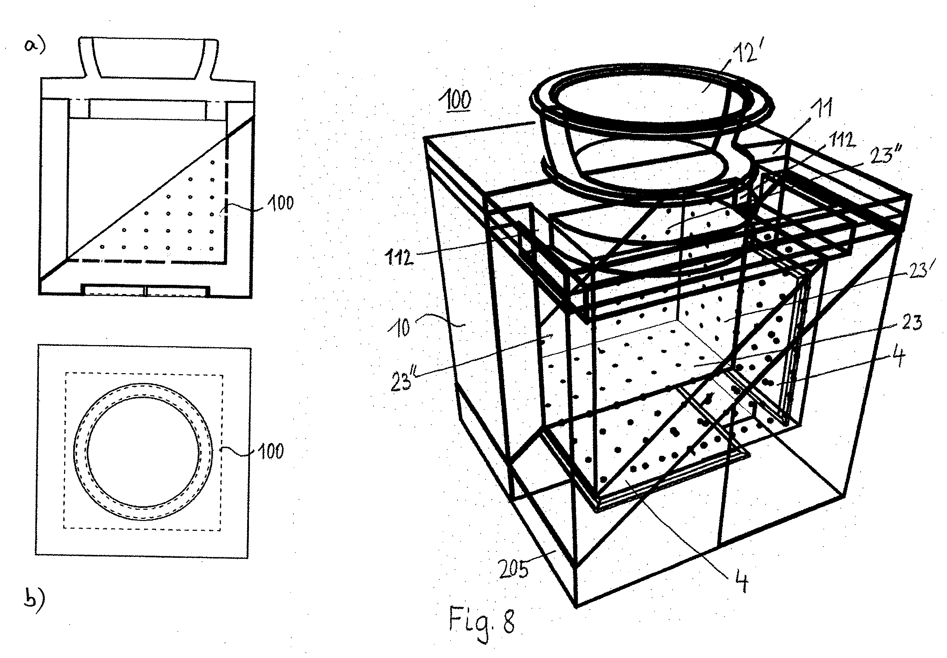

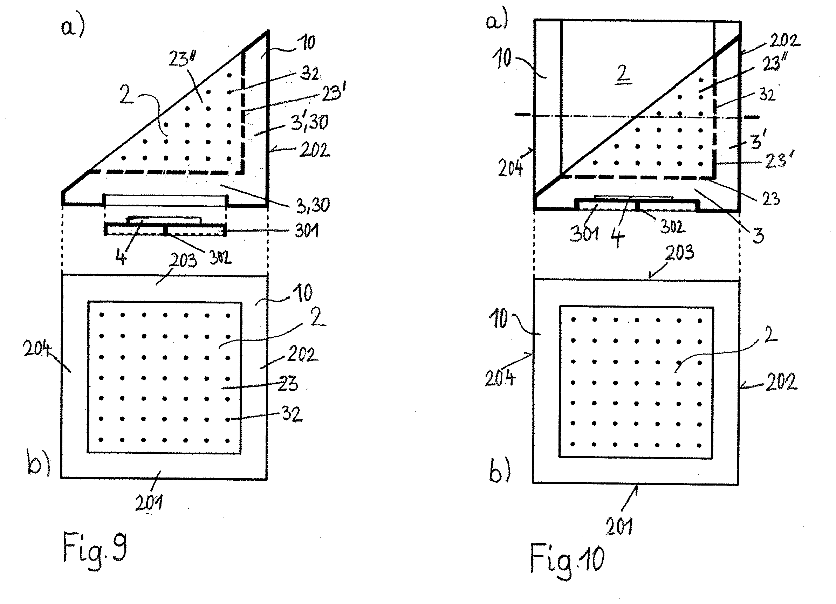

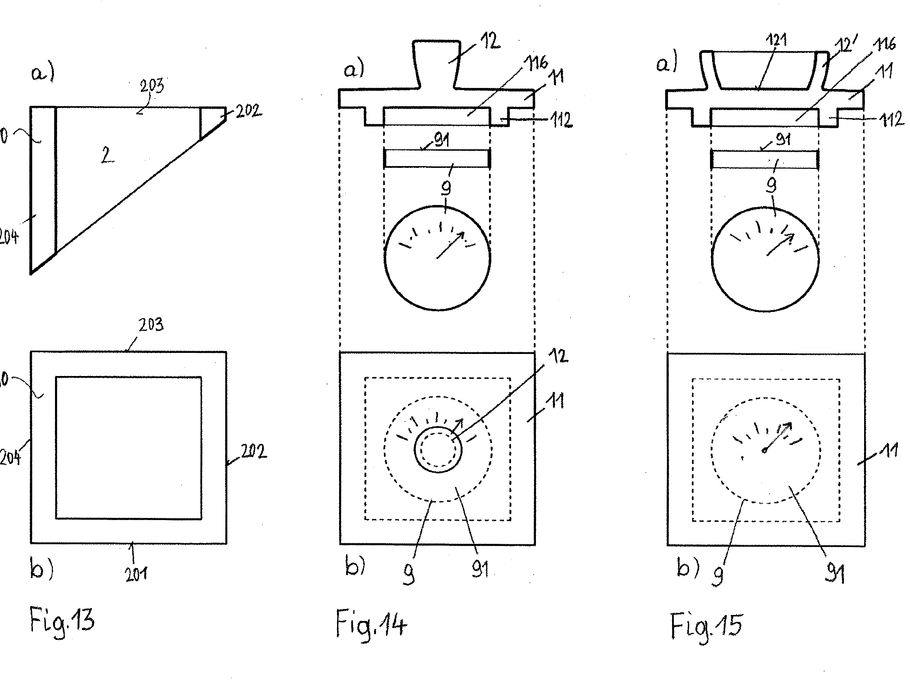

Es zeigen die Fig. 1 eine erste Ausführungsform des neuen Behältnisses für die Lagerung der feuchtegradsensiblen Produkte, die Fig. 2 die gleiche Variante dieses Behältnisses. Die Fig. 3 zeigt eine nicht erfindungsgemäße Variante desBehältnisses, die Fig. 4 eine Variante des in Fig. 3 gezeigten Behältnisses jeweils mit einem Griffknopf an ihrem Verschluss-Deckel. Die Fig. 5, 5', 6, 6', zeigen andere Ausführungsformen der Behältnisse gemäß den Fig. 1 und 2, wobei dort der Verschluss-Deckel einen schalenartigen Griff besitzt. Die Fig. 7 und 8 zeigen andere Ausführungsformen der nicht erfindungsgemäßen Behältnisse gemäß den Fig. 3 und 4, wobei dort der Verschluss-Deckel einen schalenartigen Griff besitzt. Die Fig. 9 bis 12 zeigen verschiedene Varianten von zwei unterschiedlichen nicht erfindungsgemäßen Behältnissen und die Fig. 13 bis 15 zwei Varianten von deren Verschluss-Deckeln.

Weiters zeigen die Fig. 16, 17 den unteren Boden des neuen Behältnisses mit dem nach unten hin offenen Einsatz- oder Schließdeckel für die Einbringung des Feuchtregulations-Mittels, die Fig. 18 und 19 den Korpus des eigentlichen Behälters für feuchtegradsensible Produkte mit dem genannten Boden, die Fig. 20 und 21 zwei Vertikal-Schnittansichten des neuen Produkt-Behältnisses, die Fig. 22 und 23 nur den Korpus desselben, die Fig. 24 bis 26 drei Ansichten des Verschluss-Deckels mit Griffknopf, die Fig. 27 und 28 ein weiteres derartiges Behältnis für die feuchteregulierbare Aufnahme von Produkten mit einem anders ausgebildeten Verschluss-Deckel, die Fig. 29 und 30 dessen Verschluss-Deckel, die Fig. 31 und 32 zwei Schnittansichten des neuen Behältnisses, die Fig. 33 bis 35 drei Schnittansichten des Verschluss-Deckels desselben, die Fig. 36 und 37 eine andere Variante des neuen Behältnisses und die Fig. 38 und 39 zwei Schnittansichten von dessen Verschluss-Deckel. Schließlich zeigen die Fig. 40 und 41 jeweils ein Gesamt-Humidor für wie oben definierte feuchtegradsensible Produkte mit jeweils sechs dort untergebrachten Einzel-Behältnissen für die aromaneutrale Aufbewahrung von sechs unterschiedlichen Sorten eines feuchtegradsensiblen Produkts, wie z.B. Tees, gemäß der Erfindung.

Das in Fig. 1, 1a, 1b in Schräg-, Schnitt- und Draufansicht gezeigte, neue Behältnis 100 für die Lagerung von feuchtegradsensiblen Produkten 5 mit gesondertem Boden 205 weist einen - hier zylindrischen - Binnenraum 2 mit einem Verschlussdeckel 11 auf. Der Tee-Behälter 10 weist in dem Boden 205 eine mit geruchsneutralem Metall gebildete Trennwand 23 mit Atmosphären-Austausch- und -Verbindungs-Ausnehmungen 32 auf, wobei der Boden 205 den etwa flachschachtelartigen Binnenraum 3 mit hier gegen die Außenatmosphäre Aa dicht schließender Verschlusskappe 31 beinhaltet. Es könnte in den Boden 205 auch gesondert eine Schublade mit dem Feuchteregulationsmittel 4 einführbar sein od. dgl.

Der gegen die Außenatmosphäre Aa dichtend verschließbare Binnenraum 3 ist für die Aufnahme eines, vorzugsweise flach, verpackten bzw. gestalteten Feuchteregulationsmittels 4, welches beispielsweise ein geruchsneutrales Trocknungsmittel, z.B. auf Basis von Siliziumdioxid oder Silikaten ist, vorgesehen.

Die in der Trennwand 23 in Vielzahl und in hier gleichmäßiger Verteilung vorhandenen, hier runden Querschnitt aufweisenden, Ausnehmungen bzw. Löcher 32 bilden die Atmosphären-Austausch- und -Verbindungsbrücken, welche für eine überall in den Binnenräumen 2 und 3 gleichmäßig herrschende, mit den Binnenatmosphären 20 und 30 im Binnenraum 2 für die Lagerung des feuchtegradsensiblen Produkts 5 und im Binnenraum 3 für die Aufnahme des Feuchteregulationsmittels 4 gebildete GesamtAtmosphäre 230 ohne lokale Mikro-Feuchtegradienten sorgen.

Der hier quadratische Verschlussdeckel 11 sitzt auf dem Behälter 10 für das feuchtegradsensible Produkt 5 mit Gesamt-Wandung 200 dicht auf und weist eine in dessen zylindrischen Binnenraum 2 für die Lagerung des Tees 5 ebenfalls exakt angepasst dichtend sitzende, kreisrunde Protrusion 112 mit flachzylindrischer Ausnehmung 116, sowie hier einen üblichen Griff 12 auf.

Besonders bevorzugter Weise sind sowohl Verschlussdeckel 11 als auch Produkt-Behälter 10 mit einem licht-transparenten, am besten klar durchsichtigen Material, insbesondere mit Kristallglas oder Kristall-Kunststoff, beispielsweise auf Basis von Acryl, gebildet, um jedenfalls und zu jedem beliebigen Zeitpunkt optisch zumindest den Zustand des im Binnenraum 2 gelagerten feuchtegradsensiblen Produkts 5 problemlos von außen beobachten und kontrollieren zu können.

Die Fig. 2, 2a, 2b zeigen - bei sonst gleichbleibenden Bezugszeichenbedeutungen - ein äußerlich ebenfalls etwa kubisches, neues Behältnis 100 für die konstanthaltende Aufbewahrung eines feuchtegradsensiblen Produkts, wobei dasselbe nur am - auch hier gesonderten - Boden 205 eine Trennwand 23 mit Atmosphären-Austausch- und - Verbindungs-Öffnungen 32 aufweist, und dessen Binnenraum 2 für die Lagerung des feuchtegradsensiblen Produkts kreiszylindrische Form besitzt.

Um eine gleichmäßige Atmosphäre 230 in den beiden Binnenräumen 2 und 3 ohne lokale Feuchtegradienten zu sichern, gehen von dem unteren Binnenraum 3 jeweils in Nähe seiner Ecken bzw. Kanten des Behälters 10 vier Atmosphären-Austausch- und - Verbindungsbrücken in Form von die materialstarken Kantenbereiche des Produkt-Behälters 10 vertikal nach oben durchziehenden Atmosphären-Verbindungs-Kanälen 320 zylindrischen Querschnitts aus, welche in Nähe der Oberseite des Behälters 10 in etwa muschelartig ausgebildeten, zum zylindrischen Binnenraum 2 hin schräg nach abwärts abfallenden Erweiterungen 325 enden.

Der Verschlussdeckel 11 weist hier vier Teil-Protrusionen 112' auf, welche beidseitig jeweils dort enden, wo die Erweiterungen 325 der Atmosphären-Austausch-Kanäle 320 beginnen. An den Stellen der fehlenden Teil-Protrusionen 112' sind, siehe Fig. 2a, 2b, in den Verschlussdeckel 11 jeweils exakt auf die Erweiterungen 325 der Kanäle 320 passende, zum Binnenraum 2 hin sich ebenfalls erweiternde, etwa muschelartige Eintiefungen 115 angeordnet, durch welche eine Art Umlenkung der Atmosphäre 30 des Binnenraums 3 mit dem Feuchteregulationsmittel 4 in die Atmosphäre 20 des Binnenraums 2 für das feuchtegradsensible Produkt 5 erreicht wird, sodass in den Binnenräumen 2 und 3 immer die gleiche Gesamtatmosphäre 230 ohne lokale Feuchtegradienten herrscht.

In den Fig. 3, 3a, 3b ist - bei sonst gleichbleibenden Bezugszeichenbedeutungen - in Teilschnitt-Schrägansicht ein nicht erfindungsgemäßes Aufbewahrungs-Behältnis 100 gezeigt, das drei aneinander grenzende Trennwände 23, 23', 23" mit einer Vielzahl von voneinander gleichmäßig beabstandeten Atmosphären-Austausch-Öffnungen 32 aufweist, unter und hinter welchen, hier nicht näher dargestellt, jeweils ein Binnenraum 3, 3', 3" jeweils für die Aufnahme eines Feuchteregulationsmittels 4 angeordnet ist. Unterschiedlich zu dem Behältnis 100 der Fig. 2 weist dessen Verschlussdeckel 11 eine in die obere, quadratische Öffnung des Behälters 10 passsitzend eingebrachte, außen flachquadrat-prismatische Protrusion 112 mit hier flach-zylindrischer Ausnehmung 116 auf.

Das in den Fig. 4, 4a, 4b - bei sonst gleichbleibenden Bezugszeichenbedeutungen - in Schräg- und Schnittansicht gezeigte nicht erfindungsgemäße Produktaufbewahrungs-Behältnis 100 mit im Wesentlichen kubischem Binnenraum 2 weist nicht nur einen gesonderten Boden 205 mit unterem Binnenraum 3 für die Aufnahme des Feuchteregulationsmittels 4 mit Trennwand 23 mit Atmosphäre-Austausch-Ausnehmungen 32 auf, sondern weist zwei bis gegebenenfalls vier weitere, hier jeweils in den aneinander grenzenden, vertikalen Wandabschnitten 202 und 203 des Behälters 10 angeordnete Binnenräume 3', 3", gegebenenfalls jeweils für die Aufnahme von zumindest zwei weiteren Paketen Feuchtigkeitsregulationsmittel 4 auf, welche vernünftigerweise untereinander identisch ausgebildet sind.

Der Verschlussdeckel 11 des in dieser Figur gezeigten Behälters 10 weist entsprechend dem kubischen Binnenraum 2 außenseitig eine an die real vier Wandabschnitte 201 bis 204 in deren oberem Bereich dichtend anliegende, quadratische Protrusion 112 auf.

Die Fig. 5, 5', 6, 6', 7 und 8, jeweils mit Schema-Fig. a) und b), zeigen - bei sonst gleichbleibenden Bezugszeichenbedeutungen - ganz ähnliche Behältnisse 100 wie die Fig. 1 bis 4, allerdings weisen deren Verschlussdeckel 11 nicht einen Griffknopf 12, sondern einen Schalengriff 12' auf.

Die Schnittansicht der Fig. 5a zeigt ein erfindungsgemäßes Behältnis 100 mit einem Boden 205, in dessen Binnenraum 2 von unten ein Einsatz- bzw. Verschließdeckel 301, auf welchen ein Feuchteregulationsmittel 4 aufgelegt wird, einbringbar ist. Weiters sind an denselben zwei senkrechte, als Atmosphären-Verbindungs-und -Austausch-Elemente, insbesondere -Brücken dienende Atmosphären-Verbindungskanälchen 320 angeschlossen, welche in etwa muschelartige, nach abwärts gerichtete Erweiterungen 325 in den Binnenraum 2 für die Aufbewahrung des feuchtesensiblen Produkts 5 auslaufen.

Aus der Fig. 5' ist weiters ersichtlich, wie in einer in Fig. 5'a dargestellten Ausnehmung 115 im Deckel 11 ein Hygrometer 9 mit Zeiger und Skala - von außen ablesbar - untergebracht ist.

Die Fig. 9a und 10a zeigen - bei sonst gleichbleibenden Bezugszeichenbedeutungen - einen hier schräg und vorderseitig geschnittenen nicht erfindungsgemäßen Behälter 10 für feuchtegradsensible Produkte mit Binnenraum 2 von vorne, wobei jeweils dessen hintere Rückwand 203 eine Trennwand 23" aufweist und es sind weiters aus diesen Figuren im Schnitt der Fig. 9 die Öffnungen 32 sowohl in der bodenseitigen Trennwand 23, als auch und in der seitlichen Trennwand 23' ersichtlich.

In den Fig. 9a und 10a ist unterseitig jeweils der von unten her einpassbare, vorzugsweise einschraubbare, nach unten hin offene Schließdeckel 301 mit Hilfssteg 302 erkennbar, mittels welchem der untere Binnenraum 3 verschließbar oder öffenbar ist und auf welchem z.B. das in den Binnenraum 3 einbringbare Feuchteregulationsmittel 4 ablegbar ist, das so durch die Öffnung für den Schließdeckel 301 in den Binnenraum 3 einlegbar ist. Weiters ist aus beiden Fig. 9 und 10 erkennbar, dass zwischen den beiden durch die Trennwände 23, 23' vom Binnenraum 2 abgetrennten Binnenräumen 3, 3' hier keine Trennwände od. dgl. angeordnet sind.

Die Fig. 9b und 10b zeigen den in den Fig. 9a und 10a gezeigten Produkt-Behälter 10 jeweils in einer Sicht von oben.

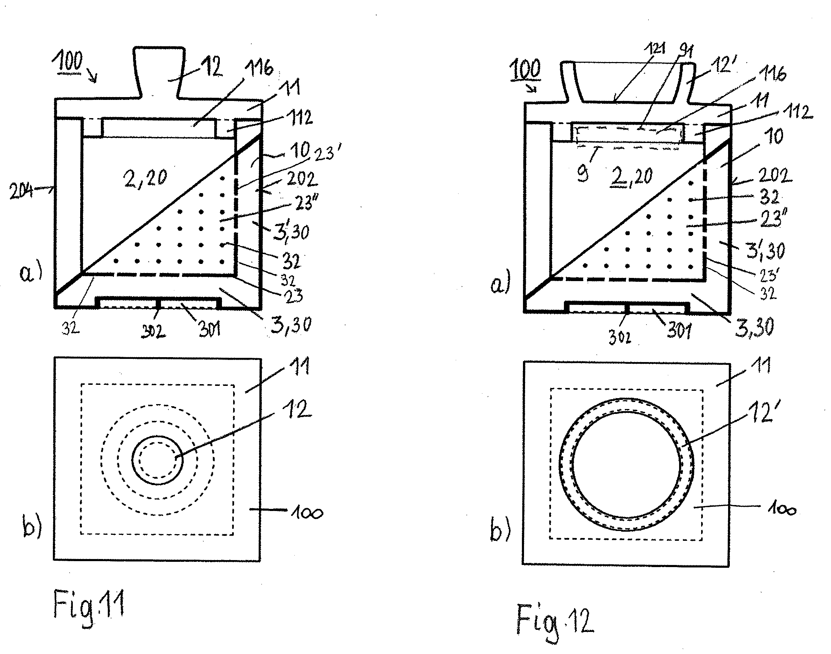

Die Fig. 11a und 12a zeigen - bei sonst gleichbleibenden Bezugszeichenbedeutungen - jeweils den gleichen kubischen Produkt-Behälter 10 mit jeweils kubischem Binnenraum 2 und jeweils drei zusammenhängenden Binnenräumen 3, 3', 3" für ein Feuchteregulationsmittel 4, allerdings jeweils mit hier zwei unterschiedlichen Arten von oberen Verschlussdeckeln 11, auf einmal mit üblichem Griffkopf 12 und einmal mit schalenartigem, grifffreundlichem Schalengriff 12' mit einem ebenen, die Sicht in den Binnenraum 2 mit dem feuchtegradsensiblen Produkt ohne Verzerrungen od. dgl. ermöglichenden Grund 121.

Die Protrusion 112 des Verschlussdeckels 11 ist außenseitig quadratisch-prismatisch und innen flach-zylindrisch ausgebildet. In den flach-zylindrischen Raum 116 kann - wie in Fig. 12a angedeutet - eine Feuchtigkeitsmessdose 9 eingepasst sein, deren Anzeigeseite 91 durch den ebenen Grund 121 des Schalengriffs 12' hindurch jederzeit ganz klar ersichtlich ist.

Die Fig. 11b und 12b zeigen das in den Fig. 11a und 12a dargestellte Behältnis 100 mit seinem jeweiligen Verschlussdeckel 11 jeweils in einer Sicht von oben.

Die Fig. 13a, 14a und 15a zeigen - bei sonst gleichbleibenden Bezugszeichenbedeutungen - einerseits den Oberteil eines schräg geschnittenen Produkt-Behälters 10 mit den teilweise dargestellten Seitenwänden 202, 204 und der Rückwand 203, weiters einen Verschlussdeckel 11 mit Griffknopf 12 und letztlich einen solchen mit Schalengriff 12', wobei jeweils in den flach-zylindrischen von der Protrusion 112 umgebenen Raum 116 eine Feuchtigkeitsmessdose 9 mit Anzeigeseite 91 einpassbar ist.

Die Fig. 13b, 14b und 15b zeigen den Produkt-Behälter 10 und deren beide Verschlussdeckel 11 jeweils in einer Sicht von oben, wobei in den Fig. 14b und 15b die klare Sichtbarkeit des Zeigers und der Skala 91 der Feuchtigkeitsmessdose 9 angedeutet ist.

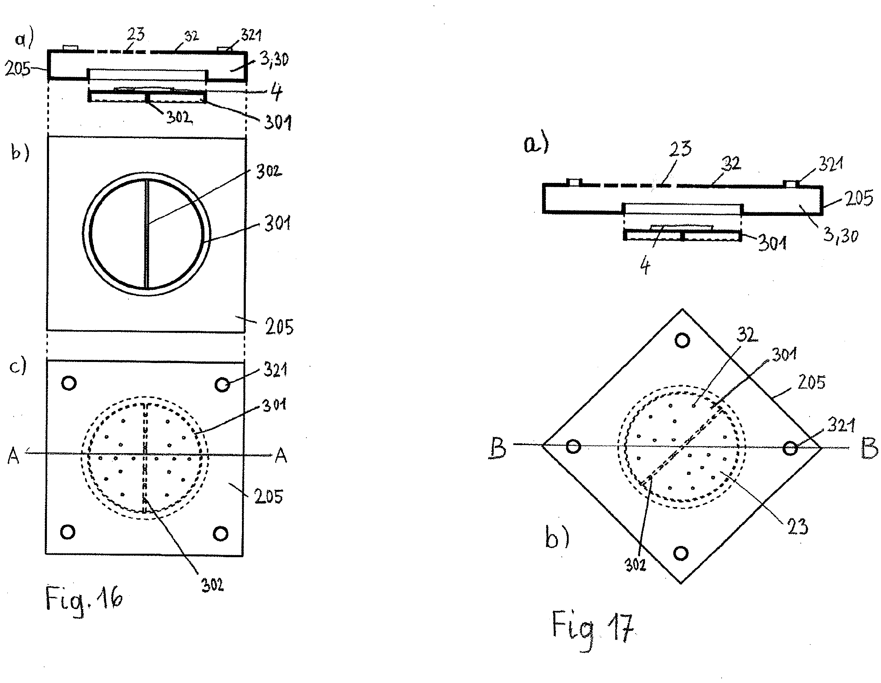

Die Fig. 16a und 17a zeigen - bei sonst gleichbleibenden Bezugszeichenbedeutungen - jeweils in Schnittansicht einen abnehmbaren Boden 205 eines Produkt-Behälters 10 mit den nach oben hin offenen Anschlüssen 321 für die Atmosphären-Verbindungs-Kanäle und der Trennwand 3 mit den Öffnungen 32 in der Trennwand 23 und den Schließdeckel 301 mit Mittelsteg 302 und Feuchteregulationsmittel 4.

Die Fig. 16b und 17b zeigen in Draufsicht den Boden 205 des Produkt-Behälters 10 mit den vertikalen Schnittebenen AA und BB zu den Fig. 16a und 17a.

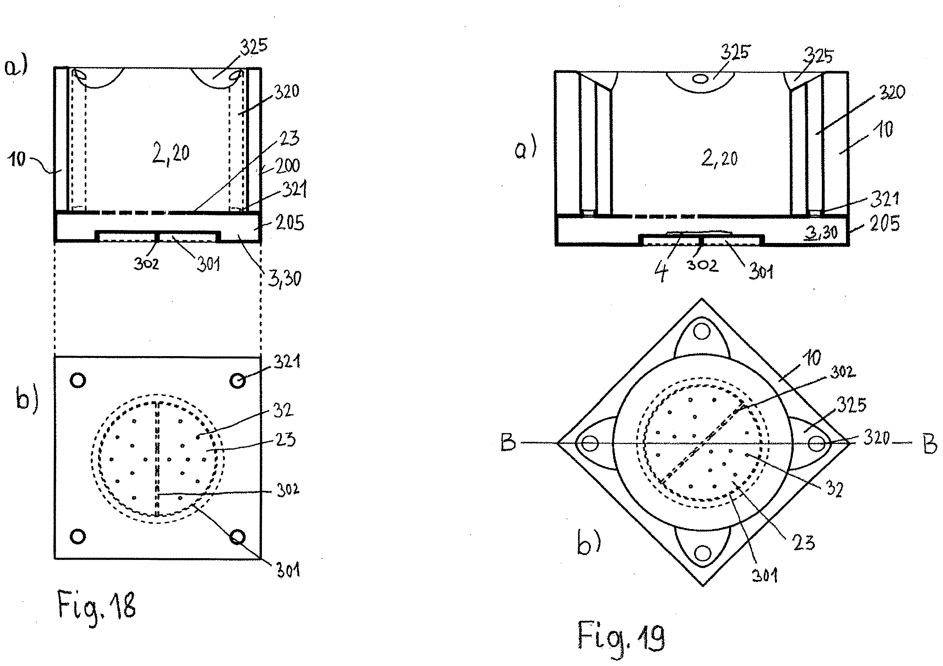

Die Fig. 18a und 19a zeigen - bei sonst gleichbleibenden Bezugszeichenbedeutungen - den mit dem abnehmbaren Boden 205 ausgestatteten derartigen Behälter 10 mit Binnenraum 2, wobei dort die auf die offenen Rohransätze 321 aufsetzbaren Atmosphären-Kanäle 320 sichtbar sind, welche in den etwa muschelartigen Erweiterungen 325 in Nähe der hier sichtbaren oberen Ebene des Behälters 10 enden.

Deutlich ist aus den Fig. 18b und 19b weiters ersichtlich, wie in den Boden 205 ein gesonderter Bodeneinsatz- bzw. Schließdeckel 301, durch dessen Öffnung das Feuchteregulationsmittel 4 einbringbar ist, einschraubbar ist und weiters der Behälter 10 mit dem gleichen Boden 205 mit den vier Anschlüssen 321. Eingezeichnet sind dort noch die seitenparallel und diagonal geführten vertikalen Schnittebenen AA und BB durch den Boden 205 und den Behälter 10 mit dem Behälter-Boden 205.

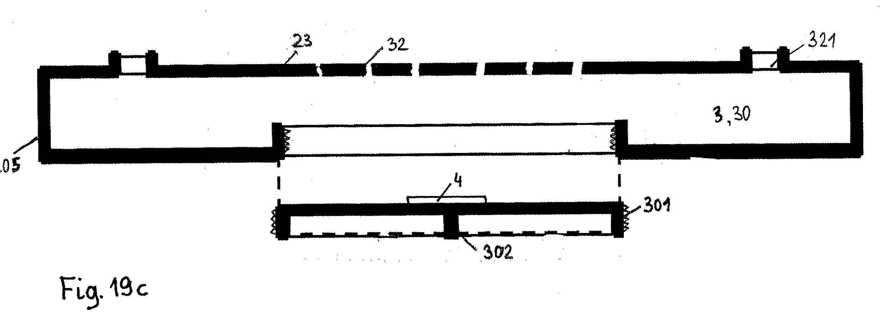

Die Fig. 19c erläutert den Bodeneinsatz- bzw. Schließdeckel 301 näher. Der, insbesondere mit Metall gefertigte, Behälter-Boden 205 mit den Anschlüssen 321 und dem Binnenraum 3 für das Feuchteregulationsmittel 4 weist eine mittige, untere Öffnung mit einem in den Binnenraum 3 ragenden Stutzen mit Innengewinde auf, in welchen mit seinem Außengewinde der nach unten hin offene Schließdeckel 301 einschraubbar ist, wobei der dortige Mittelsteg 302 insbesondere als Griff für die praktikable Durchführung des drehenden Ein- und Ausschraubens des Schließdeckels 301 in den Stutzen des Behälter-Bodens 205 dient.

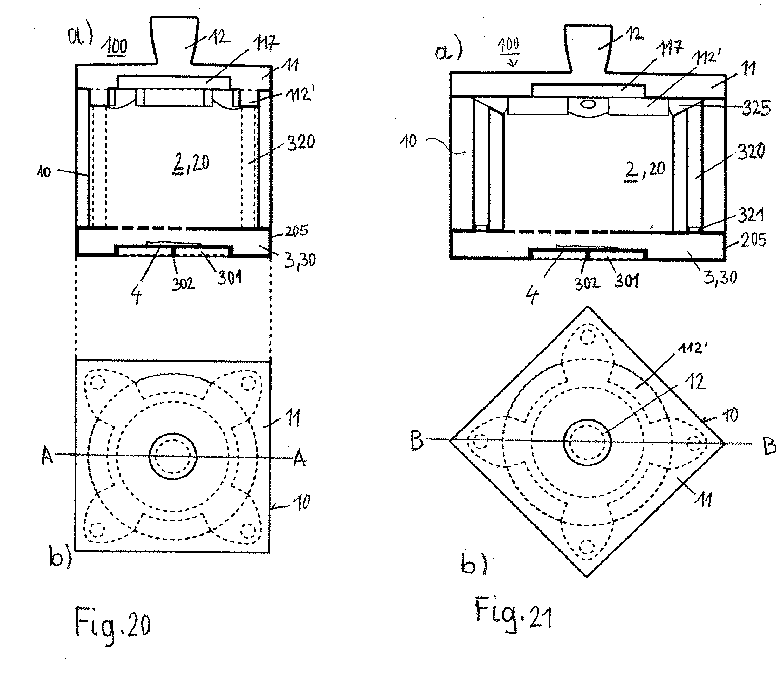

Die Fig. 20a und 21a zeigen - bei sonst gleichbleibenden Bezugszeichenbedeutungen - zwei Schnittansichten durch das jeweils gleiche Behältnis 100 mit Verschlussdeckel 11 mit Griffknopf 12, wobei der Binnenraum 3 für die Aufnahme des Feuchteregulationsmittels 4 den Boden 205 von dessen Produkt-Behälter 10 bildet.

Beide Figuren zeigen, wie die vom Binnenraum 3 und dessen Rohransätzen 321 die Atmosphären-Austausch-Kanäle 320 ausgehen und oberseitig in die muschelartigen, sich zum Binnenraum 2 für das feuchtegradsensible Produkt abwärts neigenden Ausnehmungen 325 auslaufen.

Der Verschlussdeckel 11 hat hier vier kreissektorale Protrusionen 112', welche dort, wo die muschelartigen Ausnehmungen 325 des Tee-Behälters 10 sind, fehlen, wodurch der Zusammenhang der Atmosphären 30 im Atmosphären-Verbindungs-Kanal 320 und 20 im Tee-Binnenraum 2 gesichert ist. Außerdem besitzt er eine Ausnehmung 117, in welcher ein von außen ablesbares Messgerät unterbringbar ist.

Die Fig. 20b und 21b zeigen jeweils die Sicht von oben und die beiden Schnittführungen AA und BB durch das in den Fig. 20a und 20b in Schnittansicht gezeigte Tee-Behältnis 100.

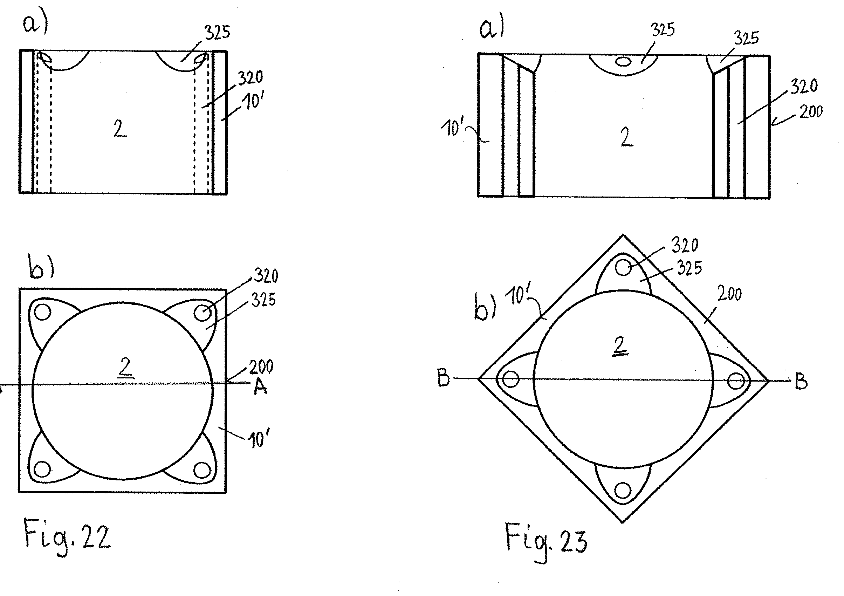

Die Fig. 22a und 23a zeigen - bei sonst gleichbleibenden Bezugszeichenbedeutungen - in zwei unterschiedlichen Schnitten den eigentlichen Korpus 10' des Produkt-Behälters 10 gemäß den Fig. 20a und 21a mit den Atmosphären-Verbindungs-Kanälen 320 und deren oberseitige, muschelartige Erweiterungen 325 deutlich, während die Fig. 22b und 23b die vertikalen Schnittführungen AA und BB durch diesen Korpus 10' des Produkt-Behälters 10 zeigen.

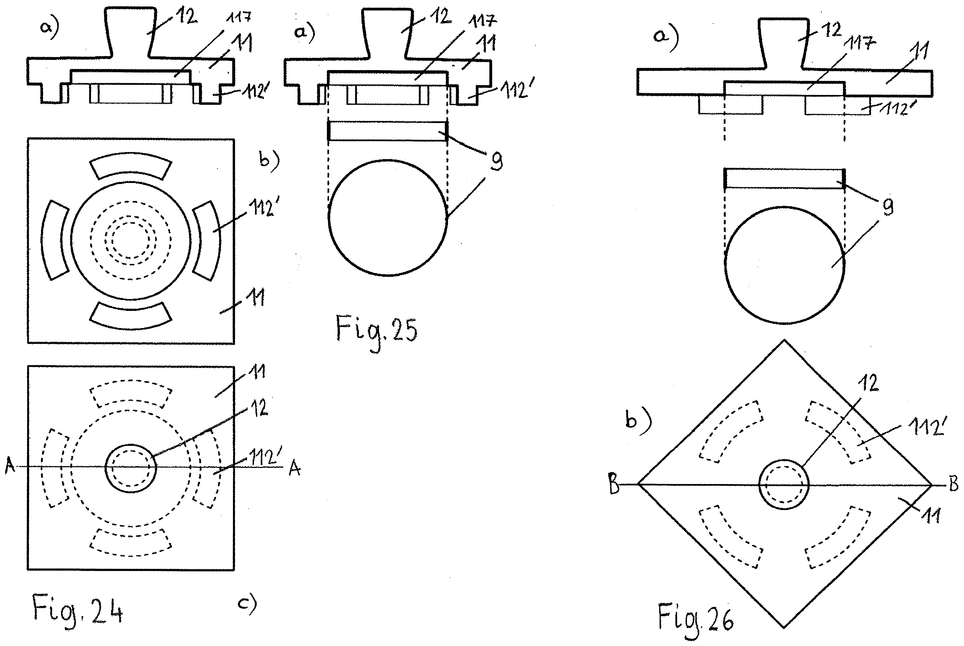

Bei sonst gleichbleibenden Bezugszeichenbedeutungen zeigen die Schnittansichten der Fig. 24a, 25a und 26a den Verschlussdeckel 11 mit Griffknopf 12 mit eigener, flach-zylindrischer Ausnehmung 117 und die Fig. 24c und 26b die vertikalen Schnittführungen A-A und B-B durch den in den Fig. 24a und 26a gezeigten Verschlussdeckel 11.

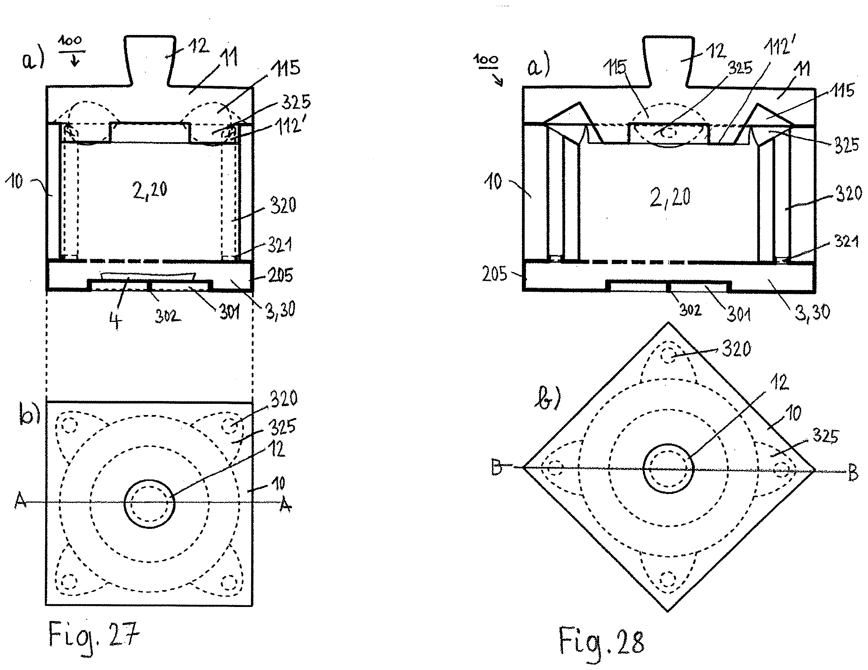

Die Fig. 27a und 28a zeigen - bei sonst gleichbleibenden Bezugszeichenbedeutungen - zwei Schnittansichten durch das jeweils gleiche erfindungsgemäße Behältnis 100 mit Verschlussdeckel 11 mit Griffknopf 12, wobei hier der Binnenraum 3 für die Aufnahme des Feuchteregulationsmittels 4 den abnehmbaren Boden 205 von dessen Produkt-Behälter 10 bildet.

Es ist dort gezeigt, wie von dem Binnenraum 3 die Atmosphären-Austausch- und -Verbindungskanäle 320 ausgehen, welche oberseitig in die muschelartigen, zum Binnenraum 2 für das feuchtegradsensible Produkt sich abwärts neigenden Ausnehmungen 325 münden.

Der Verschlussdeckel 11 selbst hat auch auf die soeben genannten oberseitigen Ausnehmungen 325 der Atmosphären-Austausch- und -Verbindungskanäle 320 passende Ausnehmungen 115 für den Ausgleich der Gesamtatmosphäre 230.

Aus den Fig. 27b und 28b sind - bei sonst gleichbleibenden Bezugszeichenbedeutungen - Draufsichten auf den Verschlussdeckel 11 ersichtlich, in welchen wieder die zu den Schnittansichten der Fig. 27a, 28a führenden Schnittführungen A-A und B-B eingezeichnet sind.

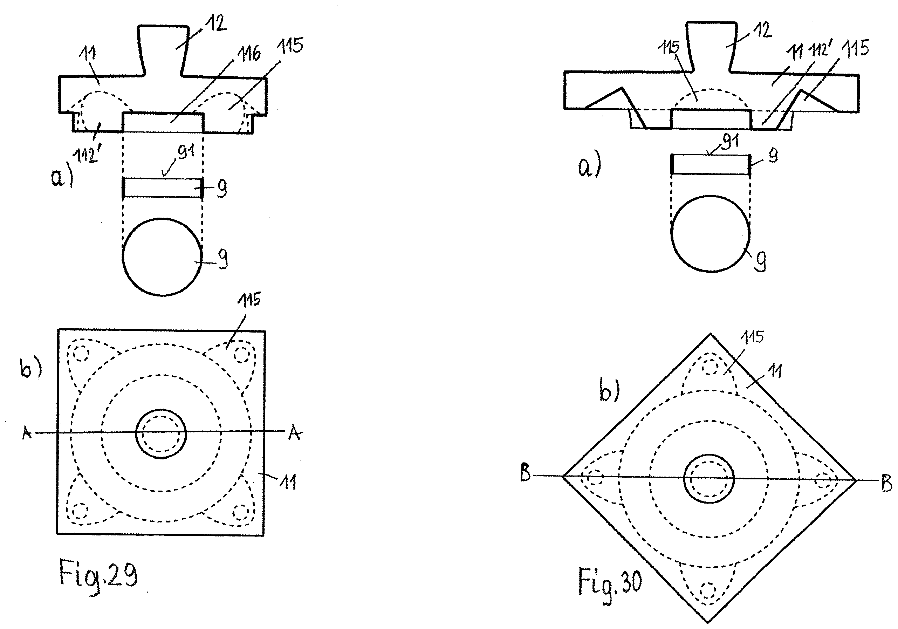

Die Fig. 29a und 30b zeigen - bei sonst gleichbleibenden Bezugszeichenbedeutungen - zwei Schnittansichten des selben Verschlussdeckels 11 mit Griffknopf 12 gemäß der Erfindung, und zwar einmal entlang eines seitenparallelen Vertikalschnitts AA und einmal entlang eines diagonalen Schnitts BB gemäß den Fig. 29b und 30b.

Deutlich ist dort zu erkennen, dass der Verschlussdeckel 11 unterseitig vier etwa muschelartige Ausnehmungen 115 für die Verbindung der Atmosphären 230 in den vorher gezeigten Atmosphäre-Austausch-Kanälen 320 mit der Atmosphäre 20 im Binnenraum 2 aufweist.

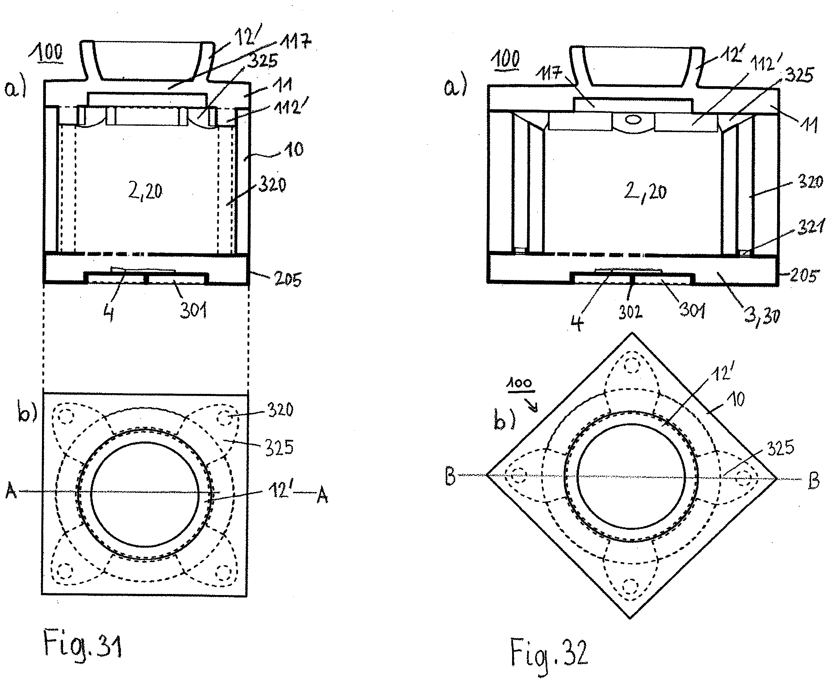

Völlig analog zu den in den Fig. 20a und 21a gezeigten Schnittansichten des neuen Behältnisses 100 für die Aufbewahrung von feuchtegradsensiblen Produkten mit Verschlussdeckel 11 mit Griffknopf 12 zeigen die Fig. 31a und 32a - bei sonst gleichbleibenden Bezugszeichenbedeutungen - ein derartiges Behältnis 100 mit einem Verschlussdeckel 11 mit Schalengriff 12' und die Fig. 31b und 32b jeweils das Behältnis 100 von oben mit den beiden vertikalen Schnittführungen AA und BB.

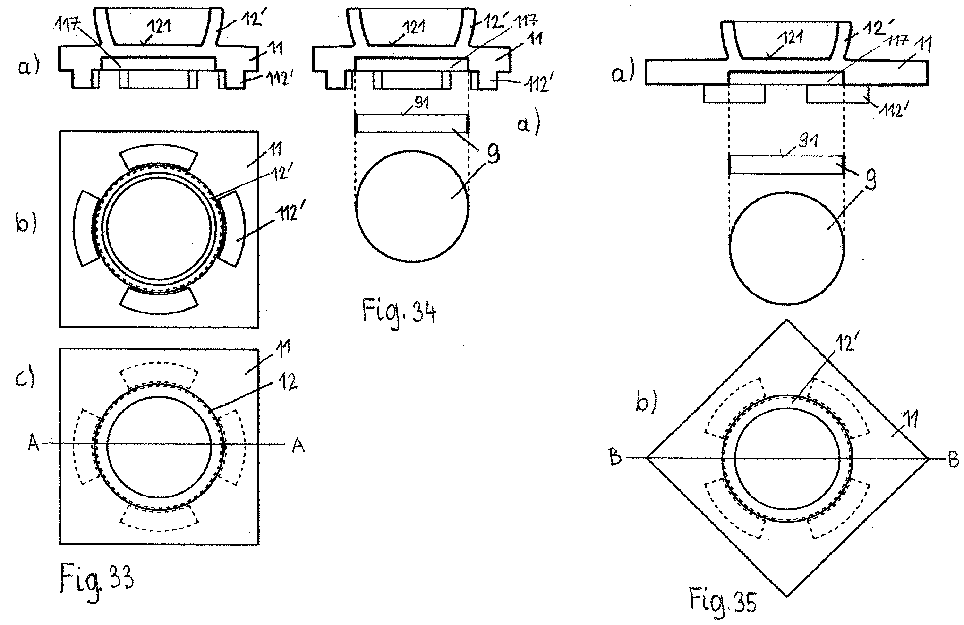

Die Fig. 33a, 34a und 35a zeigen - bei sonst gleichbleibenden Bezugszeichenbedeutungen - jeweils in Schnittansicht den gleichen, quadratische Außenform bzw. Außengestalt aufweisenden Verschlussdeckel 11 mit Schalengriff 12' mit vier sektoral kreisförmigen Teil-Protrusionen 112', wobei innerhalb derselben in dem Verschlussdeckel 11 selbst eine kreisförmige, flach-zylindrische Ausnehmung 117 angeordnet ist, in welche wiederum eine Feuchtemessdose 9 einpassbar ist, und die Dicke des Verschlussdeckels 11 ist dort wesentlich geringer ist als sonst, was die Ablesbarkeit von deren Anzeigeseite 91 mit Skala und Zeiger weiter erleichtert.

Die Fig. 33b zeigt - bei sonst gleichbleibenden Bezugszeichenbedeutungen - die Ansicht des Verschlussdeckels 11 von unten und die Fig. 33c dessen Ansicht von oben.

Aus den Fig. 33c und 35b, mit den Ansichten des Verschlussdeckels 11 mit Schalengriff 12' von oben, sind - bei sonst gleichbleibenden Bezugszeichenbedeutungen - weiters jeweils die Schnittführungen A-A und B-B durch den Verschlussdeckel 11 ersichtlich, welche die Schnittansichten der Fig. 33a und 35a ergeben.

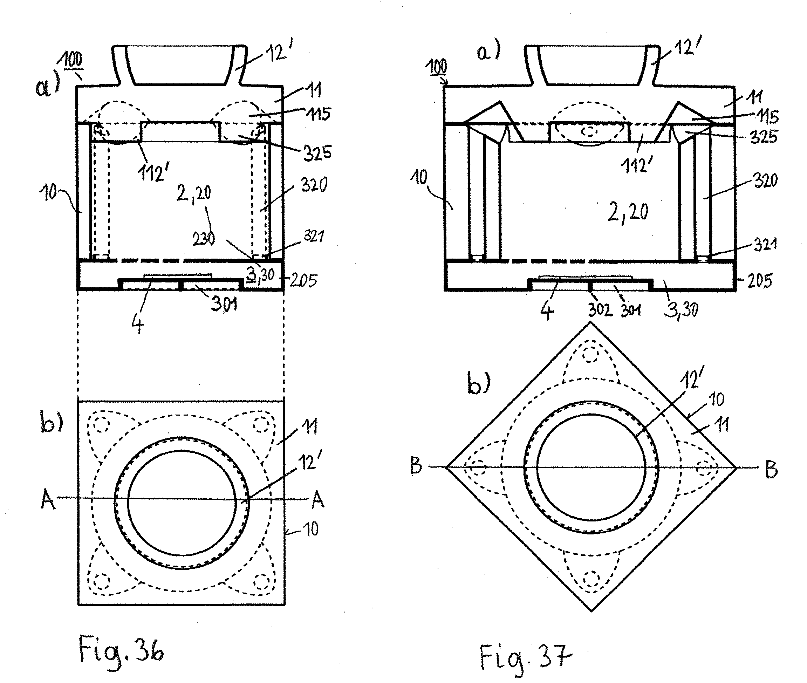

Es zeigen weiters Schnittansichten der Fig. 36a und 37a - bei sonst gleichbleibenden Bezugszeichenbedeutungen - jeweils ein neues Behältnis 100 mit einem Verschlussdeckel 11 mit Schalengriff 12' und die Fig. 36b und 37b jeweils Ansichten dieses Behältnisses 100 von oben mit den unterschiedlichen Schnittführungen AA und BB.

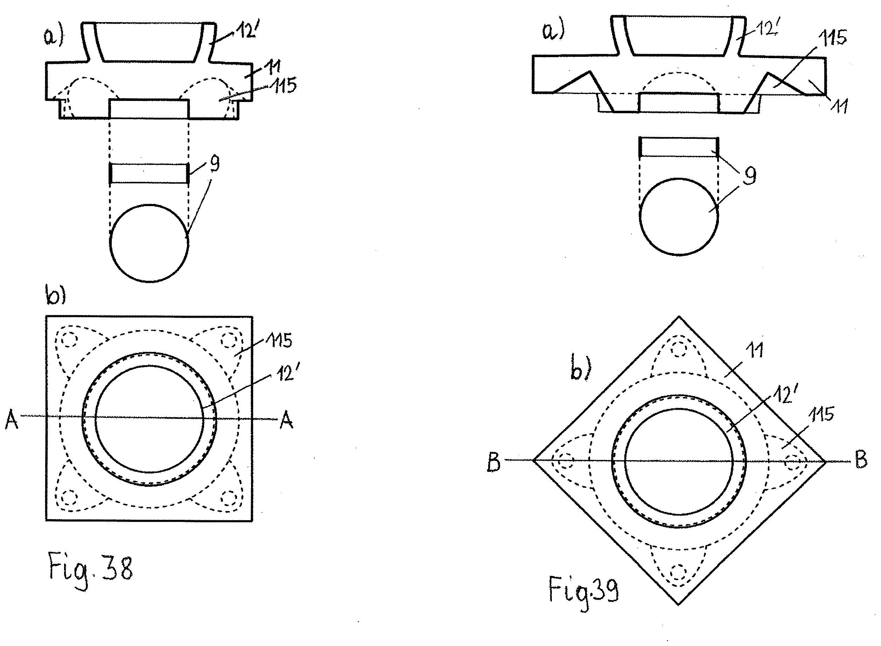

Analog zu den Darstellungen der Fig. 29 und 30 sind - bei sonst gleichbleibenden Bezugszeichenbedeutungen - die Schnittansichten und Draufsichten der Verschlussdeckel 11 mit dem Schalengriff 12' gemäß den Fig. 38a, 39a sowie 38b und 39b.

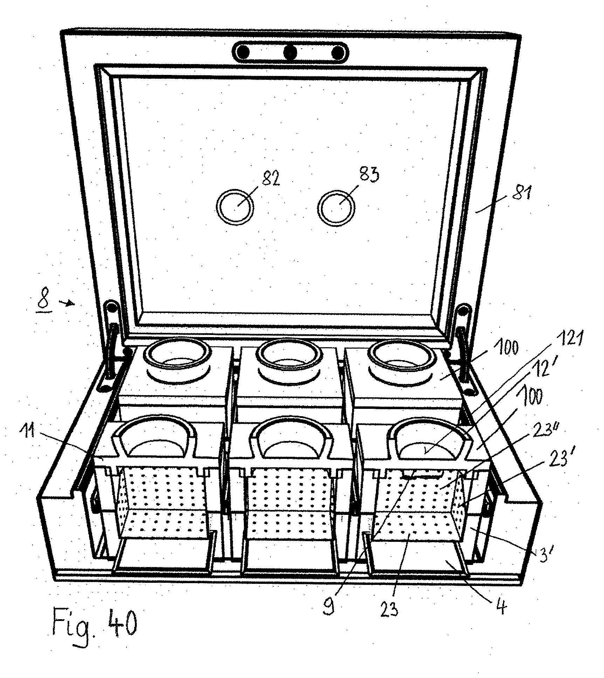

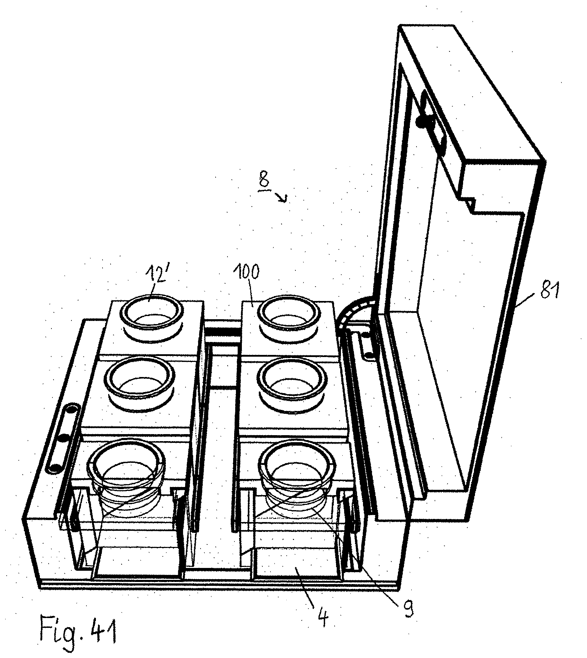

Schließlich zeigen - bei sonst gleichbleibenden Bezugszeichenbedeutungen - die Fig. 40 und 41 unterschiedliche Schräg-Draufsichten eines neuen Mehrfach- und/oder Mehrprodukt-Aufbewahrungs-Sets 8 mit aufklappbarem Deckel 81, z.B. aus Edelholz, mit Feuchte- und/oder Temperaturanzeigen 82 und 83, welches hier insgesamt sechs dicht aneinander gereihte Behältnisse 100 für die individuelle Lagerung von beispielsweise unterschiedlichen feuchtegradsensiblen Produkten verschiedener Sorten beinhaltet, wobei jedes davon eine anderen Feuchtegrad der in seinem Binnenraum 2 herrschenden Atmosphäre aufweisen kann.

Die Feuchtigkeit, ebenso, wie gegebenenfalls auch die Temperatur, zeigen die direkt unterhalb des Bodens 121 des schalenförmigen Griffs 12' des Verschlussdeckels 11 jedes der Behältnisse 100 angeordneten, also eingepassten Feuchtemessdosen 9 an.

Es ist aus den beiden Figuren 40 und 41 auch erkenntlich, wie die Zuführung der Feuchteregulationsmittel 4 in die dafür vorgesehenen, hier drei bzw. zwei von insgesamt sechs, gegebenenfalls unterschiedliche Feuchtegrade ihrer Binnen-Atmosphäre aufweisende, Binnenräume 3 für die Aufnahme der Feuchteregulationsmittel 4 der Behältnisse 100 für die Aufbewahrung von feuchtegradsensiblen Produkten funktioniert.

## Patentansprüche

1. Behältnis (100) für eine, einen jeweils optimalen Feuchtegrad der in dessen Innerem herrschenden Binnenatmosphäre ein- und aufrechthaltende und damit ein jeweils spezifisches Aroma voll erhaltende Aufbewahrung und Lagerung von feuchtegradsensiblen Produkten (5),
in welchem, vorzugsweise mit einem durchsichtigen Material, insbesondere Kristall-Glas oder Transluzid-Polymer, gebildeten, Behältnis (100) zumindest zwei aneinander grenzende Binnenräume (2, 3) angeordnet sind, deren beide in ihnen vorhandenen Atmosphären (20, 30) sich über eine Mehrzahl von Atmosphären-Verbindungs- und
- Austauschelementen zu einer einheitlichen, nur einen bestimmten Feuchtegrad ohne lokale Feuchtegradienten aufweisenden, von der Außenatmosphäre (Aa) unbeeinflussbaren Gesamt-Binnenatmosphäre (230) vereinigen,
- wobei einer (2) der beiden Binnenräume (2, 3), nämlich jener, der für die Aufnahme und Aufbewahrung des feuchtegradsensiblen Produkts (5) vorgesehen ist, mit im Wesentlichen zylindrischer Gestalt mit im Wesentlichen in sich geschlossener Gesamtwand (200) ausgebildet ist, welcher Binnenraum (2) einen abnehmbaren, jedoch gegen die Außenatmosphäre (Aa) exakt dichtenden Verschlussdeckel (11) und ein wesentlich höheres Volumen aufweist,
- als der - zumindest eine - andere, ebenfalls gegen die Außenatmosphäre (Aa) dichtend verschließbare, flache Binnenraum (3) mit relativ geringem Volumen, der für die Aufnahme und Lagerung eines Feuchteregulationsmittels (4) vorgesehen ist **dadurch gekennzeichnet,**
- **dass** das Behältnis (100) im Wesentlichen kubusartige oder nach Art eines gleichmäßig vierseitigen Prismas gebaute geometrische Außenform aufweist, und
- **dass** dessen Binnenraum (2) für die Lagerung des feuchtegradsensiblen Produkts (5) im Wesentlichen Zylinder-Form aufweist und als Atmosphären-Verbindungs- und
- Austausch-Elemente Atmosphären-Verbindungs-Kanäle (320) aufweist, und zwar zumindest zwei, bevorzugter Weise vier solche, innerhalb entsprechend verstärkter vertikaler Innenkanten- bzw. Zwickelbereiche des Behälters (10), vom Binnenraum (2) getrennt, im Wesentlichen innenkanten-parallel verlaufende, jeweils von dem unterhalb des Binnenraums (2) für die Lagerung des feuchtegradsensiblen Produkts (5) angeordneten und von demselben durch eine den Boden desselben bildende Trennwand (23), vorzugsweise mit Atmosphären-Verbindungsöffnungen (32), getrennten Binnenraum (3) für die Aufnahme des Feuchtigkeitsregulationsmittels (4) ausgehenden und an seinem oberen Ende etwa muschelartig schräg nach abwärts sich erweiternd in den Binnenraum (2) für die Lagerung des feuchtegradsensiblen Produkts (5) auslaufende, gegebenenfalls sich nach oben hin geringfügig erweiternde, im Wesentlichen rohrartig zylindrische Atmosphären-Austausch- und -Verbindungskanäle (320) aufweist.

2. Behältnis nach Anspruch 1, **dadurch gekennzeichnet, dass** die Atmosphären-Verbindungs- und Austauschelemente durch eine Vielzahl von in zumindest einer, insbesondere ebenen, Trennwand (23) zwischen dem Binnenraum (2) für die Lagerung des feuchtegradsensiblen Produkts (5) und dem zumindest einen Binnenraum (3) für die Aufnahme des Feuchteregulationsmittels (4) angeordneten, diese Trennwand (23) durchsetzenden Atmosphären-Verbindungs-Ausnehmungen (32), -Löchern, oder - Kanälchen gebildet sind.

3. Behältnis nach Anspruch 2, **dadurch gekennzeichnet, dass** die zumindest eine Trennwand (23) mit den sie durchsetzenden Atmosphären-Verbindungs-Ausnehmungen (32), -Löchern, oder -Kanälchen zwischen dem Binnenraum (2) für die Lagerung des feuchtegradsensiblen Produkts (5) und dem zumindest einen Binnenraum (3) für die Aufnahme des Feuchteregulationsmittels (4) mit geruchsneutralem Edelstahl, der vorzugsweise beidseitig mit Edelmetall, insbesondere Gold oder Palladium, beschichtet ist, gebildet ist.

4. Behältnis nach einem der Ansprüche 2 oder 3, **dadurch gekennzeichnet, dass** die Atmosphären-Verbindungs-Ausnehmungen (32), - Löcher oder -Kanälchen in der Trennwand (23) sich mit einem Öffnungswinkel (α) zwischen 80 und 60° zum Binnenraum (2) für die Lagerung des feuchtegradsensiblen Produkts (5) hin aufweiten.

5. Behältnis nach einem der Ansprüche 2 bis 4, **dadurch gekennzeichnet, dass** die Trennwand (23) kreisrund ausgebildet ist und dass die Achsen der Atmosphären-Verbindungs-Ausnehmungen (32), -Löcher oder - Kanälchen jeweils von der Trennwand-Mitte ausgehend, radial nach außen hin in Winkeln von kontinuierlich fallenden 90 bis 65°, zur Ebene bzw. Fläche der Trennwand (23) ausgerichtet sind.

6. Behältnis nach einem der Ansprüche 1 bis 5, **dadurch gekennzeichnet, dass** die Trennwand (23) nach Art eines mit geruchsneutralem Kunststoff oder mit Edelmetall beschichteten Drahtnetzes ausgebildet ist.

7. Behältnis nach einem der Ansprüche 1 bis 6, **dadurch gekennzeichnet, dass** die Trennwand (23) mittig um einen Betrag von bis zu 1,5 cm kugelkalottenförmig zum Binnenraum (2) für die Lagerung des feuchtegradsensiblen Produkts (5) hin, also konvex nach aufwärts gewölbt ist.

8. Behältnis nach einem der Ansprüche 1 bis 7, **dadurch gekennzeichnet, dass** der den Binnenraum (2) für die Lagerung des feuchtegradsensiblen Produkts (5) vom Binnenraum (3) zur Aufnahme des Feuchteregulationsmittels (4) durch eine Trennwand (23) mit Atmosphären-Austausch-Löchern (32) getrennt ist und dass von diesem Binnenraum (3) zusätzlich vier, innerhalb entsprechend verstärkter vertikaler Innenkanten-Bereiche, vom Binnenraum (3) getrennt, im Wesentlichen innenkanten-parallel verlaufende Atmosphären-Austauschs- und - Verbindungskanäle (320) ausgehen, welche an ihren oberen Enden sich etwa muschelartig schräg nach abwärts gerichtete Erweiterungen (325) in den Binnenraum (2) für die Lagerung des feuchtegradsensiblen Produkts (5) auslaufen.

9. Behältnis nach einem der Ansprüche 1 bis 8, **dadurch gekennzeichnet, dass** die obenseitig angeordnete Öffnung von dessen Behälter (10) zu dessen Binnenraum (2) kreisrunden Querschnitt aufweist und dass der - zu deren gegen die Außen-Atmosphäre (Aa) dichten Verschließung vorgesehene - Verschlussdeckel (11) eine im Wesentlichen hohlzylinderförmige in den genannten Binnenraum (2) für das feuchtegradsensible Produkt (5) abwärts ragende Protrusion (112) besitzt.

10. Behältnis nach einem der Ansprüche 1 bis 9, **dadurch gekennzeichnet, dass** die obenseitig angeordnete Öffnung (20) zu dessen Binnenraum (2) quadratischen Querschnitt aufweist, und dass der zu deren gegen die Außen-Atmosphäre (Aa) dichten Verschließung vorgesehene Verschlussdeckel (11), vier, den Seiten eines Quadrats entsprechend angeordnete, miteinander zusammenhängende, abwärts ragende Einzelprotrusionen (112') aufweist, welche den Nahbereichen der Quadratecken dort, wo sich die etwa muschelartigen Erweiterungen (325) der Atmosphären-Verbindungs- und -Austauschkanäle (320) befinden, gerundete, auch etwa muschelartige Ausnehmungen (115) aufweisen.

11. Behältnis nach einem der Ansprüche 1 und 10, **dadurch gekennzeichnet, dass** innerhalb einer hohlzylindrischen Protrusion (112) oder in einer gesonderten Ausnehmung (117) des Verschlussdeckels (11) eine dort eingepasste, flach zylindrische, von außen bzw. von oberhalb problemlos ablesbare Feuchteskala aufweisende Messdose (9) für die Anzeige der im Binnenraum (2) für die Lagerung des feuchtegradsensiblen Produkts (5) herrschenden und für die Aufrechterhaltung von dessen Qualität maßgebenden Feuchtigkeit der denselben umgebenden Atmosphäre (20, 320) angeordnet ist und dass gegebenenfalls die genannte Messdose (9) zusätzlich zur Feuchtigkeit die im Binnenraum (2) für die Lagerung des feuchtegradsensiblen Produkts (5) herrschende Temperatur misst und anzeigt.

12. Behältnis nach einem der Ansprüche 1 und 11, **dadurch gekennzeichnet, dass** innerhalb der hohlzylindrischen Protrusion (112) oder in einer gesonderten Ausnehmung (117) des Verschlussdeckels (11) ein modernes, Sensoren für die Ermittlung der Feuchte und/oder der Temperatur im Binnenraum (2) für die Lagerung des feuchtegradsensiblen Produkts (5) aufweisendes und deren Werte digital wiedergebendes Digitalanzeigegerät angeordnet ist.

13. Behältnis nach einem der Ansprüche 1 und 12, **dadurch gekennzeichnet,**
- **dass** der zumindest eine Binnenraum (3), und die gegebenenfalls weiters vorhandenen Binnenräume (3', 3"), für die Aufnahme des Feuchteregulationsmittels (4) im Wesentlichen flach-schachtelartig ausgebildet ist bzw. sind und für die Bestückung dieses/dieser Binnenraums/Binnenräume (3, 3', 3") mittels mit klavier-scharnierartigem Scharnier ausgestattetem klappenartigen Schließdeckels (35) öffenbar und nach erfolgter Bestückung gegen die Außenatmosphäre (Aa) wieder dichtend schließbar ist bzw. sind, oder aber
- **dass** ein unterseitiger Schließdeckel (301) vorgesehen ist, auf welchem das Feuchteregulationsmittel (4) positioniert sein kann, welches Ensemble (301-4) von Schließdeckel und Feuchteregulationsmittel (4) von unten in den Boden (205) des Behälters (10) mit dem Binnenraum (3) für das Feuchteregulationsmittel (4) gegen die Außen-Atmosphäre (Aa) dichtend einschiebbar, insbesondere einschraubbar, ist, wobei durch die untere Öffnung des Bodens (205) das Feuchteregulationsmittel (4) in den im Boden (35) vorhandenen Binnenraum (3) einbringbar ist.

14. Behältnis nach einem der Ansprüche 1 bis 13, **dadurch gekennzeichnet, dass** der zumindest eine Binnenraum (3; 3', 3") für die Aufnahme des Feuchteregulationsmittels (4) im Wesentlichen flach-schachtelartig ausgebildet und in denselben jeweils eine Art Ladenelement mit dem Feuchteregulationsmittel (4) gegen die Außenatmosphäre (Aa) dichtend einschiebbar ist.

15. Gesamt-Aufbewahrungs-Set (8) für feuchtegradsensible Produkte (5) mit mehreren, insbesondere sechs, nebeneinander angeordneten, vorzugsweise seitlich aneinander liegenden Behältnissen (100), nach einem der Ansprüche 1 bis14, mit in denselben, jeweils einzeln herrschenden und aufrecht erhaltenen, gegebenenfalls unterschiedlichen Feuchtigkeitsgraden ihrer Atmosphären für die Lagerung der jeweiligen feuchtegradsensiblen Produkte oder von feuchtegradsensiblen Produkten unterschiedlicher Sorten oder Geschmacksrichtungen in einer mit einem aufklappbaren Deckel (81), vorzugsweise mit Raum-Feuchte- und/oder -Temperatur anzeigenden Anzeigegeräten (82, 83) ausgestatteten, insbesondere aus Edelholz gefertigten, Humidor-Kiste.

## Claims

1. Container (100) for a preservation and storage, holding and maintaining a respectively optimum degree of moisture of the internal atmosphere in its interior and therewith fully preserving a respectively specific aroma, of moisture level-sensitive products (5),
in which container (100), formed preferably with a transparent material, in particular crystal glass or translucent polymer, are disposed at least two inner chambers (2, 3) adjoining on one another, of which both atmospheres (20, 30) present in them unite by means of a plurality of atmosphere-connecting-and-exchange-elements to form a unified total internal atmosphere (230), having only one specified moisture level without local moisture gradients, unable to be influenced by the external atmosphere (Aa),
- wherein one (2) of the two inner chambers (2, 3), specifically that which is provided for the reception and preservation of the moisture level-sensitive product (5), is designed with substantially cylindrical shape having a substantially self-contained total wall (200), which inner chamber (2) has a closing cap (11) which is removable but however precisely sealing against the external atmosphere (Aa), and a substantially greater volume,
- than the - at least one - other planar inner chamber (3), also able to be closed sealingly against the external atmosphere (Aa), with a relatively low volume, which is provided for the reception and storage of a moisture regulating agent (4) **characterised in**
- **that** the container (100) has an outer form which is substantially cube-shaped or constructed in the manner of an even four-sided prism, and
- **that** its inner chamber (2) for the storage of the moisture level-sensitive product (5) has a substantially cylinder shape and has atmosphere-connecting-channels (320) as atmosphere-connecting-and-exchange-elements, specifically has at least two, more preferably four such substantially pipe-like cylindrical atmosphere-exchange-and-connecting-channels (320) extending substantially parallel to the inner edges within appropriately reinforced vertical inner edges or gusset areas of the container (10), separated from the inner chamber (2), in each case running out from the inner chamber (3) for the reception of the moisture regulating agent (4), disposed below the inner chamber (2) for the storage of the moisture level-sensitive product (5) and separated from the same by a partition wall (23), preferably with atmosphere connecting openings (32), forming the floor of the same, and running out at its upper end in an approximately shell -like manner broadening obliquely downwards into the inner chamber (2) for the storage of the moisture level-sensitive product (5), where necessary broadening slightly upwards.

2. Container according to claim 1, **characterised in that** the atmosphere-connecting-and-exchange-elements are formed by a plurality of atmosphere-connecting-recesses (32), -holes or -channels disposed in at least one, in particular planar, partition wall (23) between the inner chamber (2) for the storage of the moisture level-sensitive product (5) and the at least one inner chamber (3) for the reception of the moisture regulating agent (4), penetrating through this separating wall (23).

3. Container according to claim 2, **characterised in that** the at least one partition wall (23), with the atmosphere-connecting-recesses (32), -holes, or -channels penetrating it, between the inner chamber (2) for the storage of the moisture level-sensitive product (5) and the at least one inner chamber (3) for the reception of the moisture regulating agent (4) is formed by odour-neutral stainless steel, which is preferably coated on both sides with precious metal, in particular gold or palladium.

4. Container according to any of claims 2 or 3, **characterised in that** the atmosphere-connecting-recesses (32), -holes or -channels in the partition wall (23) broaden with an aperture angle (α) of between 80 and 60° towards the inner chamber (2) for the storage of the moisture level-sensitive product (5).

5. Container according to any of claims 2 to 4, **characterised in that** the partition wall (23) is formed circular in shape and that the axes of the atmosphere-connecting-recesses (32), -holes or -channels are oriented in each case starting from the partition wall middle, radially to the outside at angles of continuously falling 90 to 65°, to the plane or surface of the partition wall (23).

6. Container according to any of claims 1 to 5, **characterised in that** the partition wall (23) is designed in the manner of a wire mesh coated with odour neutral plastic or with precious metal.

7. Container according to any of claims 1 to 6, **characterised in that** the partition wall (23) is domed in the centre by up to 1.5 cm in the manner of a spherical calotte towards the inner chamber (2) for the storage of the moisture level-sensitive product (5), that is in a convex manner upwards.

8. Container according to any of claims 1 to 7, **characterised in that** the inner chamber (2) for the storage of the moisture level-sensitive product (5) is separated from the inner chamber (3) for the reception of the moisture regulating agent (4) by a partition wall (23) with atmosphere-exchange-holes (32) and that from this inner chamber (3) start in addition four atmosphere-exchange-and-connecting channels (320) extending within accordingly reinforced vertical inner edge regions, separated from the inner chamber (3) substantially parallel to the inner edges, which broadenings (325), oriented at their top ends in an approximately shell-like manner obliquely downwards, run out into the inner chamber (2) for the storage of the moisture level-sensitive product (5).

9. Container according to any of claims 1 to 8, **characterised in that** the opening disposed on the top side of its container (10) to its inner chamber (2) has a circular cross-section and that the closure cap (11) - provided for its sealed closure with respect to the outer atmosphere (Aa) - has a substantially hollow cylindrically shaped protrusion (112) protruding downwards into the said inner chamber (2) for the moisture level-sensitive product (5).

10. Container according to any of claims 1 to 9, **characterised in that** the opening (20) disposed on the top side to its inner chamber (2) has a square cross-section and that the closure cap (11) provided for its sealed closure against the outer atmosphere (Aa) has four individual protrusions (112') disposed according to the sides of the square, interconnected with one another, protruding downwards, which the near areas of the square corners there, where the approximately shell-like broadenings (325) of the atmosphere-exchange-and-connecting channels (320) are located, have rounded, also approximately shell-like recesses (115).

11. Container according to any of claims 1 and 10, **characterised in that** within a hollow cylindrical protrusion (112) or in a separate recess (117) of the closure cap (11) is disposed a flatly cylindrical load cell (9) fitted therein, having a moisture scale which can be read off without problem from the outside or from above, for the display of the moisture content, prevailing in the inner chamber (2) for the storage of the moisture level-sensitive product (5) and crucial for the maintenance of its quality, of the atmosphere (20, 320) surrounding the same, and that where necessary the said load cell (9) in addition to the moisture level measures and displays the temperature prevailing in the inner chamber (2) for the storage of the moisture level-sensitive product (5).

12. Container according to any of claims 1 and 11, **characterised in that** within the hollow cylindrical protrusion (112) or in a separate recess (117) of the closure cap (11) is disposed a modern digital display device having sensors for the determination of the moisture content and/or the temperature in the inner chamber (2) for the storage of the moisture level-sensitive product (5) and rendering their values digitally.

13. Container according to any of claims 1 and 12, **characterised in**
- than the at least one inner chamber (3), and where appropriate the further present inner chambers (3', 3"), is or are designed for the reception of the moisture regulating agent (4) in a substantially flat-box-like manner and is or are able to be opened by means of a flat-like closing lid (35) equipped with piano hinge-like hinge for the filling of this/these inner chamber(s) (3, 3', 3") and after the filling has been carried out can be closed again sealingly against the outer atmosphere (Aa), or however
- that a bottom side closing lid (301) is provided, on which the moisture regulating agent (4) can be positioned, which ensemble (301-4) of closing lid and moisture regulating agent (4) can be slid in sealingly into the floor (205) of the container (10) with the inner chamber (3) for the moisture regulating agent (4) against the outer atmosphere (Aa), in particular can be screwed in, wherein through the bottom opening of the floor (205) the moisture regulating agent (4) can be introduced into the inner chamber (3) present in the floor (35).

14. Container according to any of claims 1 to 13, **characterised in that** the at least one inner chamber (3; 3', 3") for the reception of the moisture regulating agent (4) is formed substantially in a flat-box-like manner and respectively a type of drawer element with the moisture regulating agent (4) against the outer atmosphere (Aa) can be sealingly slid into the same.

15. Total preserving set (8) for moisture level-sensitive products (5) with several, in particular six containers (100) according to any of claims 1 to 14, disposed next one another, preferably lying laterally on one another, with in the same respectively individually prevailing and maintained, where appropriate different, moisture levels of their atmospheres for the storage of the respective moisture level-sensitive products or of moisture level-sensitive products of different types or flavours in a humidor case with a lid (81) which can be folded out, preferably equipped with display devices (82, 83) displaying room moisture and/or room temperature, in particular manufactured from high-grade wood.

## Revendications

1. Récipient (100) pour une conservation et un stockage respectant et maintenant un degré d'humidité optimal respectivement de l'atmosphère intérieure régnant en son intérieur et ainsi obtenant pleinement un arôme respectivement spécifique de produits sensibles au degré d'humidité (5),
dans lequel récipient (100) formé de préférence avec un matériau transparent, en particulier du verre cristal ou polymère translucide au moins deux espaces intérieurs (2, 3) contigus l'un à l'autre sont agencés, dont les deux atmosphères (20, 30) présentes en eux se réunissent par le biais d'une pluralité d'éléments de liaison et d'échange d'atmosphère en une atmosphère intérieure entière (230) uniforme, non influençable par l'atmosphère extérieure (Aa), présentant seulement un degré d'humidité déterminé sans gradient d'humidité local,
- dans lequel un (2) des deux espaces intérieurs (2, 3), à savoir celui qui est prévu pour la réception et la conservation du produit sensible au degré d'humidité (5), est réalisé avec une forme sensiblement cylindrique avec une paroi entière (200) fermée sensiblement en soi, lequel espace intérieur (2) présente un couvercle de fermeture (11) amovible, rendant étanche exactement toutefois contre l'atmosphère extérieure (Aa) et un volume sensiblement plus grand,
- que le - au moins un - autre espace intérieur (3) plat, refermable de manière étanche aussi contre l'atmosphère extérieure (Aa) avec un volume relativement faible qui est prévu pour la réception et le stockage d'un moyen de régulation d'humidité (4), **caractérisé en ce**
- **que** le récipient (100) présente une forme extérieure géométrique sensiblement en cube ou construite comme un prisme quadrilatéral uniformément, et
- **que** son espace intérieur (2) présente pour le stockage du produit sensible au degré d'humidité (5) une forme sensiblement cylindrique et comme éléments de liaison et d'échange d'atmosphère présente des canaux de liaison d'atmosphère (320), et ce au moins deux, de manière plus préférée quatre tels canaux de liaison et d'échange d'atmosphère (320) cylindriques sensiblement en tube, s'élargissant légèrement éventuellement vers le haut, diminuant au niveau de leur extrémité supérieure à peu près en forme de coquille en biais vers le bas s'élargissant dans l'espace intérieur (2) pour le stockage du produit sensible au degré d'humidité (5) et sortant respectivement du même espace intérieur (3) séparé par une paroi de séparation (23) formant le fond de celui-ci, de préférence avec des ouvertures de liaison d'atmosphère (32) et agencé en dessous de l'espace intérieur (2) pour le stockage du produit sensible au degré d'humidité (5) pour la réception du moyen de régulation d'humidité (4), s'étendant sensiblement parallèlement à l'arête intérieure, séparément de l'espace intérieur (2), dans des zones d'arête intérieure ou de soufflet verticales du récipient (10) renforcées de manière correspondante.

2. Récipient selon la revendication 1, **caractérisé en ce que** les éléments de liaison et d'échange d'atmosphère sont formés par une pluralité d'évidements (32), de trous ou de petits canaux de liaison d'atmosphère traversant cette paroi de séparation (23), agencés dans au moins une paroi de séparation (23), en particulier plane, entre l'espace intérieur (2) pour le stockage du produit sensible au degré d'humidité (5) et l'au moins un espace intérieur (3) pour la réception du moyen de régulation d'humidité (4).

3. Récipient selon la revendication 2, **caractérisé en ce que** l'au moins une paroi de séparation (23) est formée avec les évidements (32), trous ou petits canaux de liaison d'atmosphère la traversant entre l'espace intérieur (2) pour le stockage du produit sensible au degré d'humidité (5) et l'au moins un espace intérieur (3) pour la réception du moyen de régulation d'humidité (4) avec acier spécial neutre en odeur qui est revêtu de préférence de part et d'autre par du métal spécial, en particulier de l'or ou du palladium.

4. Récipient selon l'une des revendications 2 ou 3, **caractérisé en ce que** les évidements (32), trous ou petits canaux de liaison d'atmosphère, s'élargissent dans la paroi de séparation (23) avec un angle d'ouverture (α) entre 80 et 60° vers l'espace intérieur (2) pour le stockage du produit sensible au degré d'humidité (5).

5. Récipient selon l'une des revendications 2 à 4, **caractérisé en ce que** la paroi de séparation (23) est réalisée de manière ronde et circulaire et que les axes des évidements (32), trous ou petits canaux de liaison d'atmosphère sont orientés respectivement sortant du milieu de paroi de séparation, tombant radialement vers l'extérieur en angles de 90° à 65° en continu, par rapport au plan ou à la surface de la paroi de séparation (23).

6. Récipient selon l'une des revendications 1 à 5, **caractérisé en ce que** la paroi de séparation (23) est réalisée comme une toile métallique revêtue de matière plastique à odeur neutre ou de métal spécial.

7. Récipient selon l'une des revendications 1 à 6, **caractérisé en ce que** la paroi de séparation (23) est courbée au milieu d'une valeur de 1,5 cm au maximum en forme de calotte sphérique vers l'espace intérieur (2) pour le stockage du produit sensible au degré d'humidité (5), aussi de manière convexe vers le haut.

8. Récipient selon l'une des revendications 1 à 7, **caractérisé en ce que** l'espace intérieur (2) pour le stockage du produit sensible au degré d'humidité (5) est séparé de l'espace intérieur (3) pour la réception du moyen de régulation d'humidité (4) par une paroi de séparation (23) avec des trous d'échange d'atmosphère (32) et que de cet espace intérieur (3) sortent en outre quatre canaux de liaison et d'échange d'atmosphère (320) s'étendant sensiblement parallèlement à l'arête intérieure, séparément de l'espace intérieur (3), dans des zones d'arête intérieure verticales renforcées de manière correspondante, qui diminuent des élargissements (325) dirigés à peu près en forme de coquille en biais vers le bas au niveau de leurs extrémités supérieures dans l'espace intérieur (2) pour le stockage du produit sensible au degré d'humidité (5).

9. Récipient selon l'une des revendications 1 à 8, **caractérisé en ce que** l'ouverture agencée côté supérieur présente une section transversale ronde et circulaire de son récipient (10) à son espace intérieur (2) et que le couvercle de fermeture (11) - prévu pour sa fermeture étanche contre l'atmosphère extérieure (Aa) - possède une saillie (112) dépassant vers le bas dans l'espace intérieur (2) cité pour le produit sensible au degré d'humidité (5), sensiblement en forme de cylindre creux.

10. Récipient selon l'une des revendications 1 à 9, **caractérisé en ce que** l'ouverture agencée côté supérieur (20) présente une section transversale carrée à son espace intérieur (2), et que le couvercle de fermeture (11) prévu pour sa fermeture étanche contre l'atmosphère extérieure (Aa) présente quatre saillies individuelles (112') dépassant vers le bas, communiquant entre elles, agencées selon les côtés d'un carré qui présentent des évidements (115) arrondis aux zones proches des coins de carré là où les élargissements (325) à peu près en forme de coquille des canaux de liaison et d'échange d'atmosphère (320) se trouvent, aussi à peu près en forme de coquille.

11. Récipient selon l'une des revendications 1 et 10, **caractérisé en ce que** dans une saillie (112) cylindrique et creuse ou dans un évidement séparé (117) du couvercle de fermeture (11) est agencée une boîte dynamométrique (9) présentant une échelle d'humidité lisible sans problème de l'extérieur ou de dessus, cylindrique et plate, qui y est ajustée pour l'affichage de l'humidité régnant dans l'espace intérieur (2) pour le stockage du produit sensible au degré d'humidité (5) et déterminante pour le maintien de sa qualité de l'atmosphère (20, 320) entourant celui-ci et qu'éventuellement la boîte dynamométrique (9) citée mesure et indique, outre l'humidité, la température régnant dans l'espace intérieur (2) pour le stockage du produit sensible au degré d'humidité (5).

12. Récipient selon l'une des revendications 1 et 11, **caractérisé en ce qu'**un appareil d'affichage numérique moderne, présentant des capteurs pour la détermination de l'humidité et/ou de la température dans l'espace intérieur (2) pour le stockage du produit sensible au degré d'humidité (5) et rendant numériquement ses valeurs est agencé dans la saillie (112) cylindrique et creuse ou dans un évidement séparé (117) du couvercle de fermeture (11).

13. Récipient selon l'une des revendications 1 et 12, **caractérisé en ce**
- **que** l'au moins un espace intérieur (3), et les espaces intérieurs (3', 3") présents éventuellement en outre pour la réception du moyen de régulation d'humidité (4) est ou sont réalisés sensiblement comme une boîte plate ou est ou sont ouvrable(s) pour l'équipement de cet/ces espaces intérieurs (3, 3', 3") au moyen d'un couvercle de fermeture (35) de type clapet équipé d'une charnière de type charnière en bande et est ou sont refermables à nouveau de manière étanche contre l'atmosphère extérieure (Aa) une fois l'équipement effectué, ou mais
- **qu'**un couvercle de fermeture (301) côté inférieur est prévu, sur lequel le moyen de régulation d'humidité (4) peut être positionné, lequel ensemble (301-4) du couvercle de fermeture et du moyen de régulation d'humidité (4) peut être enfoncé, en particulier vissé, de manière étanche contre l'atmosphère extérieure (Aa) depuis le bas dans le fond (205) du récipient (10) avec l'espace intérieur (3) pour le moyen de régulation d'humidité (4), dans lequel le moyen de régulation d'humidité (4) peut être introduit dans l'espace intérieur (3) présent dans le fond (35) par l'ouverture inférieure du fond (205).

14. Récipient selon l'une des revendications 1 à 13, **caractérisé en ce que** l'au moins un espace intérieur (3 ; 3', 3") est réalisé pour la réception du moyen de régulation d'humidité (4) sensiblement comme une boîte plate et respectivement un type d'élément de volet avec le moyen de régulation d'humidité (4) peut être enfoncé de manière étanche contre l'atmosphère extérieure (Aa) dans celui-ci.

15. Ensemble de conservation entier (8) pour des produits sensibles au degré d'humidité (5) avec plusieurs récipients (100), en particulier six, agencés les uns à côté des autres, se trouvant de préférence latéralement les uns sur les autres, selon l'une des revendications 1 à 14, avec des degrés d'humidité éventuellement différents, maintenus et régnant respectivement individuellement dans ceux-ci de leurs atmosphères pour le stockage des produits respectifs sensibles au degré d'humidité ou de produits sensibles au degré d'humidité de différentes sortes ou goûts dans une caisse Humidor fabriquée en particulier en bois spécial, équipé d'un couvercle (81) rabattable, de préférence avec des appareils d'affichage (82, 83) indiquant l'humidité ambiante et/ou la température ambiante.
